(19)

Europäisches
Patentamt
European
Patent Office
Office européen
des brevets

(11) **EP 2 192 314 B1**

(12) **EUROPEAN PATENT SPECIFICATION**

(45) Date of publication and mention
of the grant of the patent:
**16.01.2013 Bulletin 2013/03**

(21) Application number: **08833454.5**

(22) Date of filing: **25.09.2008**

(51) Int Cl.:
*F16C 33/20* (2006.01)     *F16C 17/04* (2006.01)
*F16C 33/74* (2006.01)     *B60G 3/28* (2006.01)
*B60G 15/06* (2006.01)

(86) International application number:
**PCT/JP2008/002673**

(87) International publication number:
**WO 2009/041052 (02.04.2009 Gazette 2009/14)**

(54) **THRUST SLIDE BEARING MADE OF SYNTHETIC RESIN**

AXIALGLEITLAGER AUS SYNTHETISCHEM HARZ

PALIER COULISSANT A POUSSEE REALISE EN RESINE SYNTHETIQUE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **27.09.2007   JP 2007252159**

(43) Date of publication of application:
**02.06.2010   Bulletin 2010/22**

(73) Proprietor: **Oiles Corporation
Tokyo 108-0075 (JP)**

(72) Inventor: **KANEKO, Ryohei
Fujisawa-shi
Kanagawa 252-0811 (JP)**

(74) Representative: **Jackson, Martin Peter
J A Kemp
14 South Square
Gray's Inn
London WC1R 5JJ (GB)**

(56) References cited:
**EP-A1- 1 365 162       EP-A1- 1 548 303
JP-A- 7 269 562         JP-A- 8 159 160
JP-A- 2001 173 658      JP-A- 2004 263 720
JP-U- 7 041 055**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a synthetic resin-made thrust sliding bearing, and more particularly to a synthetic resin-made thrust sliding bearing which is suitably incorporated as a thrust sliding bearing of a strut-type suspension (Macpherson type) in a four-wheeled motor vehicle.

BACKGROUND ART

[Patent Document 1] JP-UM-B-4-52488
[Patent Document 2] JP-UM-B-2-1532
[Patent Document 3] JP-UM-B-2-6263
[Patent Document 4] JP-UM-B-8-2500
[Patent Document 5] JP-UM-B-4-47445

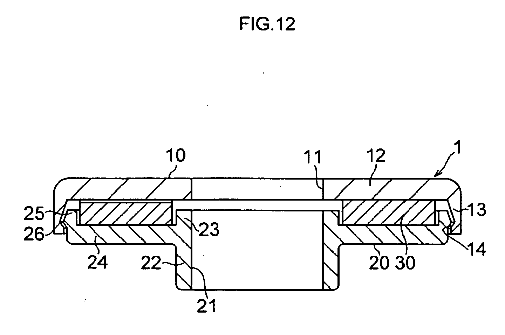

In general, a strut-type suspension is mainly used in a front wheel of a four-wheeled motor vehicle, and is constructed such that a strut assembly incorporating a hydraulic shock absorber in a cylinder formed integrally with a main shaft is combined with a coil spring. Among such suspensions, there is a type of structure in which the axis of the coil spring is actively offset with respect to the axis of the strut, so as to allow the sliding of a piston rod of the shock absorber incorporated in the strut to be effected smoothly. There is another type of structure in which the coil spring is disposed by aligning the axis of the coil spring with the axis of the strut. In either structure, a bearing is disposed between a mounting member for a motor vehicle body and an upper spring seat of the coil spring to allow the rotation to be effected smoothly when the strut assembly rotates together with the coil spring by the steering operation.
In this thrust bearing, a rolling bearing using balls or needles or a synthetic resin-made sliding bearing is used. However, the rolling bearing has a possibility of causing a fatigue failure in the balls or needles owing to such as infinitesimal oscillations and a vibratory load, so that there is a problem in that it is difficult to maintain a smooth steering operation. As compared with the rolling bearing, the thrust sliding bearing has a high frictional torque and therefore has the problem that the steering operation is made heavy. Furthermore, both bearings have the problem that the steering operation is made heavy due to the high frictional force of a dust seal formed of an elastomer fitted to prevent the ingress of foreign objects such as dust onto sliding surfaces, and the synthetic resin-made sliding bearing in particular has the problem that the steering operation is made much heavier.
To overcome the above-described problems, the present applicant proposed synthetic resin-made thrust sliding bearings which are each comprised of a synthetic resin-made upper casing, a synthetic resin-made lower casing, and a synthetic resin-made bearing piece interposed between the upper and lower casings, wherein the upper and lower casings are combined by elastic fitting, and sealing portions based on labyrinth action are respectively formed on the inner peripheral surface sides, the outer peripheral surface sides, and in the resilient fitting portions between the upper and lower casings, to prevent the entry of foreign objects such as dust onto the bearing sliding surface by means of that sealing portions (described in Patent Document 1, Patent Document 2, Patent Document 3, Patent Document 4, and Patent Document 5).
These synthetic resin-made thrust sliding bearings will be described with reference to a drawing as follows. In Fig. 12, a synthetic resin-made thrust sliding bearing 1 is comprised of a synthetic resin-made upper casing 10, a synthetic resin-made lower casing 20, and a synthetic resin-made bearing piece 30 interposed between the upper and lower casings 10 and 20, wherein the upper casing 10 includes a disk-shaped flat portion 12 having a circular hole 11 in its central portion, a cylindrical engaging suspended portion 13 formed integrally at an outer peripheral edge of the disk-shaped flat portion 12, and an engaging hook portion 14 formed on an inner peripheral surface of an end portion of the cylindrical engaging suspended portion 13, and the lower casing 20 includes a cylindrical portion 22 having an inner peripheral surface defining an insertion hole 21, an annular wide collar portion 24 formed integrally on an outer peripheral surface of the cylindrical portion 22 in such a manner as to cause a portion 23 of the cylindrical portion 22 to project, a cylindrical engaging projecting portion 25 formed integrally at an outer peripheral edge of the annular wide collar portion 24, and an engaging portion 26 formed on an outer peripheral surface of a lower end of the cylindrical engaging projecting portion 25. The upper casing 10 is combined with the lower casing 20 by causing the engaging hook portion 14 to be resiliently fitted to the engaging portion 26 of the lower casing 20.
EP 1,548,303 and EP 1,365,162 disclose a synthetic resin-made thrust sliding bearing in accordance with the pre-characterizing section of claim 1.

DISCLOSURE OF THE INVENTION

PROBLEMS THAT THE INVENTION IS TO SOLVE

With these synthetic resin-made thrust sliding bearings, it is possible to overcome the problem of an increase in the steering operating force caused by the dust seal formed of a rubber elastomer fitted between the sliding surfaces in such a manner as to surround the sliding surfaces, and it is possible to obtain a stable and smooth steering operating force by preventing as practically as possible the entry of foreign objects such as dust onto the sliding surfaces.

The above-described sliding bearings improve sliding characteristics such as low friction characteristics and wear resistance through a combination of synthetic resin elements forming the upper and lower casings and the thrust sliding bearing piece interposed between the upper and lower casings. However, a problem was found that a creep (cold flow) phenomenon is induced in the synthetic resin forming the thrust sliding bearing piece interposed between the upper and lower casings, and a shift takes place from original sliding through the sliding bearing piece to sliding between the upper and lower casings due to the creep deformation, causing a decline in the sliding characteristics such as an increase in the coefficient of friction and the deterioration of wear resistance.

As a result of conducting strenuous studies to overcome the above-described problems, it was found that even in cases where the creep deformation has occurred in the sliding bearing piece, by adopting a predetermined relationship between, on the one hand, the volume of an annular gap between the sliding bearing piece and an annular recess of the lower casing where the sliding bearing is disposed and, on the other hand, the volume of the portion of the sliding bearing piece which projects from the annular recess, it is possible to constantly allow sliding to be effected through the sliding bearing piece without undergoing a shift to sliding between the upper and lower casings, thereby making it possible to maintain the sliding characteristics such as low friction characteristics and wear resistance for extended periods of time.

The present invention has been devised on the basis of the above-described finding, and its object is to provide a synthetic resin-made thrust sliding bearing comprised of synthetic resin-made upper and lower casings and a synthetic resin-made bearing piece interposed between the upper and lower casings, and which, even in cases where the creep deformation has occurred in the sliding bearing piece, constantly allows sliding to be effected through the sliding bearing piece without undergoing a shift to sliding between the upper and lower casings, thereby making it possible to maintain the sliding characteristics such as low friction characteristics and wear resistance for extended periods of time.

MEANS FOR OVERCOMING THE PROBLEMS

A synthetic resin-made thrust sliding bearing in accordance with the invention is characterized by comprising: an upper casing having an annular flat portion; a lower casing which is superposed on the upper casing so as to be rotatable about an axis of the upper casing, and has an annular flat portion opposed to the annular flat portion of the upper casing and an annular recess formed in the annular flat portion and surrounded by concentric first and second annular projections of the lower casing; and a synthetic resin-made thrust sliding bearing piece constituted by a disk which is disposed in the annular recess of the lower casing, is brought into sliding contact with the annular flat portion of the upper casing, and has a circular hole in a central portion thereof, said disk having the substantially same cross section dimension all around, the thrust sliding bearing piece being disposed in the annular recess via an annular clearance (A1) between an inner peripheral surface of the circular hole and an outer peripheral surface of the first annular projection of the lower casing and an annular clearance (A2) between an outer peripheral surface of the disk and an inner peripheral surface of the second annular projection of the lower casing, and being disposed in the annular recess such that an upper surface thereof is brought into sliding contact with a lower surface of the upper casing to have a portion projecting outside the annular recess, and such that a lower surface thereof is brought into sliding contact with a bottom surface of the annular recess of the lower casing, the upper casing being combined with the lower casing by being resiliently fitted to the lower casing, characterized in that, wherein if it is assumed that an outside diameter of the outer peripheral surface of the first annular projection is c, an inside diameter of the inner peripheral surface of the second annular projection is d, a diameter of the inner peripheral surface of the circular hole of the thrust sliding bearing piece is a, a diameter of the outer peripheral surface of the disk is b, a thickness of the thrust sliding bearing piece corresponding to a depth of the annular recess from the bottom surface to the opening thereof is f, and a thickness of the thrust sliding bearing piece is e, then a sum (A) of volumes of the annular clearances (A1) and (A2) and a volume (B) of that portion of the thrust sliding bearing piece which projects outside the annular recess of the lower casing are in a relationship of B>A shown by the formula $e(b^2 - a^2) > f(d^2 - c^2)$.

According to the synthetic resin-made thrust sliding bearing in accordance with the invention, since the above-described relational expression is satisfied, even in cases where creep deformation has occurred to the synthetic resin-made thrust sliding bearing piece which is interposed between the upper and lower casings, sliding can constantly be effected through the sliding bearing piece without shifting to sliding between the upper and lower casings, thereby making it possible to maintain the sliding characteristics such as low friction characteristics and wear resistance for extended periods of time.

In one form of the synthetic resin-made thrust sliding bearing in accordance with the invention, the upper casing may include: the annular flat portion having a circular hole in a central portion thereof; a cylindrical engaging suspended portion formed integrally at an outer peripheral edge of the annular flat portion; and an engaging hook portion formed on an inner peripheral surface of an end portion of the cylindrical engaging suspended portion, and the lower casing may include: the annular flat portion having in a central portion thereof an insertion hole of a same diameter as that of the circular hole of the upper casing; the first annular projection having an inside diameter identical to that of the insertion hole and formed integrally on an upper surface of the annular flat portion; the second annular projection formed integrally at an outer peripheral edge of the annular flat portion in such a manner as to be radially outwardly spaced apart a predetermined interval from the first annular projection, so as to form the annular recess in cooperation with the first annular projection and the upper surface of the annular flat portion; and an engaging portion formed on an outer peripheral surface of a lower end of the second annular projection, the upper casing being combined with the lower casing by causing the engaging hook portion to be resiliently fitted to the engaging portion of the lower casing.

According to the synthetic resin-made thrust sliding bearing having the above-described form, since the upper and lower casings are combined with each other by causing the engaging hook portion of the upper casing to be resiliently fitted to the engaging portion of the lower casing, the assembling operation can be performed very simply.

In another form of the synthetic resin-made thrust sliding bearing in accordance with the invention, the upper casing may include: the annular flat portion having a circular hole in a central portion thereof; a cylindrical suspended portion formed integrally with a lower surface of the annular flat portion in such a manner as to be radially outwardly spaced apart a predetermined interval from a peripheral edge of the circular hole; a cylindrical engaging suspended portion formed integrally at an outer peripheral edge of the annular flat portion in such a manner as to be radially outwardly spaced apart a predetermined interval from the cylindrical suspended portion, so as to form an annular groove in cooperation with the cylindrical suspended portion; and an engaging hook portion formed on an inner peripheral surface of an end portion of the cylindrical engaging suspended portion. Further, the lower casing may include: the annular flat portion having in a central portion thereof an insertion hole of a same diameter as that of the circular hole of the upper casing; the first annular projection having an inside diameter identical to that of the insertion hole and formed on an upper surface of the annular flat portion; the second annular projection formed on the upper surface of the annular flat portion in such a manner as to be radially outwardly spaced apart a predetermined interval from the first annular projection, so as to form the annular recess in cooperation with the first annular projection and the upper surface of the annular flat portion; a cylindrical engaging projecting portion formed integrally at an outer peripheral edge of the annular flat portion in such a manner as to be radially outwardly spaced apart a predetermined interval from the second annular projection, so as to form an annular groove in cooperation with the second annular projection; and an engaging portion formed on an outer peripheral surface of a lower end of the cylindrical engaging projecting portion. Thus, the upper casing is combined with the lower casing by causing an end portion of the cylindrical suspended portion to be radially superposed on an end portion of the second annular projection and by causing the engaging hook portion to be resiliently fitted to the engaging portion.

According to the synthetic resin-made thrust sliding bearing having the above-described form, the upper casing is combined with the lower casing by causing the end portion of the cylindrical suspended portion to be radially superposed on the end portion of the second annular projection of the lower casing and by causing the engaging hook portion to be resiliently fitted to the engaging portion of the lower casing. Therefore, sealed portions based on the labyrinth action are formed in the superposed portions of the cylindrical suspended portion and the second annular projection and in the resiliently fitting portions of the engaging hook portion and the engaging portion, with the result that the entry of foreign objects such as dust between the upper and lower casings is prevented.

In still another form of the synthetic resin-made thrust sliding bearing in accordance with the invention, the upper casing may include: the annular flat portion having a circular hole in a central portion thereof; a first cylindrical suspended portion formed integrally with a lower surface of the annular flat portion and having an inside diameter identical to that of the circular hole; a second cylindrical suspended portion formed integrally with the lower surface of the annular flat portion in such a manner as to be radially outwardly spaced apart a predetermined interval from an outer peripheral surface of the first cylindrical suspended portion, so as to form an annular recess in cooperation with the first cylindrical suspended portion and the lower surface of the annular flat portion; a cylindrical engaging suspended portion formed integrally at an outer peripheral edge of the annular flat portion in such a manner as to be radially outwardly spaced apart a predetermined interval from the second cylindrical suspended portion, so as to form an annular groove in cooperation with the second cylindrical suspended portion; and an engaging hook portion formed on an inner peripheral surface of an end portion of the cylindrical engaging suspended portion. Further, the lower casing may include: the annular flat portion having in a central portion thereof an insertion hole of a same diameter as that of the circular hole of the upper casing; the first annular projection formed integrally on an upper surface of the annular flat portion in such a manner as to be radially outwardly spaced apart from the insertion hole through an annular shoulder portion; the second annular projection formed on the upper surface of the annular flat portion in such a manner as to be radially outwardly spaced apart a predetermined interval from the first annular projection, so as to form the annular recess in cooperation with the first annular projection and the upper surface of the annular flat portion; a cylindrical engaging projecting portion formed integrally at an outer peripheral edge of the annular flat portion in such a manner as to be radially outwardly spaced apart a predetermined interval from an outer peripheral surface of the second annular projection, so as to form an annular groove in cooperation with the second annular projection and the upper surface of the annular flat portion; and an engaging portion formed on an outer peripheral surface of a lower end of the cylindrical engaging projecting portion. Thus, the upper casing is combined with the lower casing by causing an end portion of the first cylindrical suspended portion and an end portion of the second cylindrical suspended portion to be radially superposed on an end portion of the first annular projection and an end portion of the second annular projection, respectively, and by causing the engaging hook portion to be resiliently fitted to the engaging portion.

According to the synthetic resin-made thrust sliding bearing having the above-described form, the upper casing is combined with the lower casing by causing the end portion of the first cylindrical suspended portion and the end portion of the second cylindrical suspended portion to be radially superposed on the end portion of the first annular projection of the lower casing and the end portion of the second annular projection of the lower casing, respectively, and by causing the engaging hook portion to be resiliently fitted to the engaging portion of the lower casing. Therefore, sealed portions based on the labyrinth action are formed in the superposed portions of the first cylindrical suspended portion and the first annular projection, in the superposed portions of the second cylindrical suspended portion and the second annular projection, and in the resiliently fitting portions of the engaging hook portion and the engaging portion, with the result that the entry of foreign objects such as dust between the upper and lower casings is further prevented.

In a further form of the synthetic resin-made thrust sliding bearing in accordance with the invention, the upper casing may include: the annular flat portion having a circular hole in a central portion thereof; a first cylindrical suspended portion formed integrally with a lower surface of the annular flat portion and having an inside diameter identical to that of the circular hole; a second cylindrical suspended portion formed integrally with the lower surface of the annular flat portion in such a manner as to be radially outwardly spaced apart a predetermined interval from the first cylindrical suspended portion, so as to form an annular groove in cooperation with an outer peripheral surface of the first cylindrical suspended portion; a third cylindrical suspended portion formed integrally with the lower surface of the annular flat portion in such a manner as to be radially outwardly spaced apart a predetermined interval from the second cylindrical suspended portion, so as to form the annular recess in cooperation with the second cylindrical suspended portion and the lower surface of the annular flat portion; a cylindrical engaging suspended portion formed integrally at an outer peripheral edge of the disk-shaped flat portion in such a manner as to be radially outwardly spaced apart a predetermined interval from the third cylindrical suspended portion, so as to form an annular groove in cooperation with the third cylindrical suspended portion; and an engaging hook portion formed on an inner peripheral surface of an end portion of the cylindrical engaging suspended portion. Further, the lower casing may include: the annular flat portion having in a central portion thereof an insertion hole of a same diameter as that of the circular hole of the upper casing; a cylindrical projecting portion formed integrally on an upper surface of the annular flat portion in such a manner as to be radially outwardly spaced apart from the insertion hole through an annular shoulder portion; the first annular projection formed integrally on the upper surface of the annular flat portion in such a manner as to be radially outwardly spaced apart a predetermined interval from the cylindrical projecting portion, so as to form an annular groove in cooperation with the cylindrical projecting portion; the second annular projection formed on the upper surface of the annular flat portion in such a manner as to be radially outwardly spaced apart a predetermined interval from the first annular projection, so as to form the annular recess in cooperation with the first annular projection and the upper surface of the annular flat portion; a cylindrical engaging projecting portion formed integrally at an outer peripheral edge of the annular flat portion in such a manner as to be radially outwardly spaced apart a predetermined interval from an outer peripheral surface of the second annular projection, so as to form an annular groove in cooperation with the second annular projection; and an engaging portion formed on an outer peripheral surface of a lower end of the cylindrical engaging projecting portion. Thus, the upper casing is combined with the lower casing by causing respective end portions of the first cylindrical suspended portion and the second cylindrical suspended portion and an end portion of the third cylindrical suspended portion to be radially superposed on respective end portions of the cylindrical projecting portion and the first annular projection and an end portion of the second annular projection, respectively, and by causing the engaging hook portion to be resiliently fitted to the engaging portion.

According to the synthetic resin-made thrust sliding bearing having the above-described form, the upper casing is combined with the lower casing by causing the respective end portions of the first cylindrical suspended portion and the second cylindrical suspended portion and the end portion of the third cylindrical suspended portion to be radially superposed on the respective end portions of the cylindrical projecting portion and the first annular projection of the lower casing and the end portion of the second annular projection of the lower casing, respectively, and by causing the engaging hook portion to be resiliently fitted to the engaging portion of the lower casing. Therefore, sealed portions based on the labyrinth action are formed in the superposed portions of the first cylindrical suspended portion and the cylindrical projecting portion, in the superposed portions of the second cylindrical suspended portion and the first annular projection, in the superposed portions of the third cylindrical suspended portion and the second annular projection, and in the resiliently fitting portions of the engaging hook portion and the engaging portion. As a result, the entry of foreign objects such as dust between the upper and lower casings is further prevented.

In the synthetic resin-made thrust sliding bearing in accordance with the above-described forms, the thrust sliding bearing piece may have on each of the upper and lower surfaces thereof an annular groove which surrounds the circular hole and a plurality of radial grooves each having one end open at the annular groove and another end open at the outer peripheral surface and arranged in a circumferential direction, and the lower casing may have a cylindrical portion formed integrally on a lower surface thereof and having an inside diameter identical to that of the insertion hole.

According to the synthetic resin-made thrust sliding bearing having the cylindrical portion formed integrally on the lower surface of the lower casing and having an inside diameter identical to that of the insertion hole, in mounting a mounting member of the thrust sliding bearing, the cylindrical portion can be inserted in a mounting hole formed in the mounting member, so that the mounting operation thereof is made very simple.

ADVANTAGES OF THE INVENTION

According to the invention, if it is assumed that an outside diameter of the outer peripheral surface of the first annular projection is c, the inside diameter of the inner peripheral surface of the second annular projection is d, the diameter of the inner peripheral surface of the circular hole of the thrust sliding bearing piece is a, the diameter of the outer peripheral surface of the disk is b, the thickness of the thrust sliding bearing piece corresponding to the depth of the annular recess from the bottom surface to the opening thereof is f, and the thickness of the thrust sliding bearing piece is e, then the sum (A) of volumes of the annular clearances (A1) and (A2) and the volume (B) of that portion of the thrust sliding bearing piece which projects from the opening of the annular recess are in a relationship of $e(b^2-a^2)> f(d^2-c^2)$. Therefore, it is possible to provide a synthetic resin-made thrust sliding bearing in which, even in cases where creep deformation has occurred to the sliding bearing piece, sliding can constantly be effected through the sliding bearing piece without shifting to sliding between the upper and lower casings, thereby making it possible to maintain the sliding characteristics such as low friction characteristics and wear resistance for extended periods of time.

Hereafter, a more detailed description will be given of the present invention with reference to preferred embodiments shown in the drawings. It should be noted that the present invention is not limited to these embodiments.

BRIEF DESCRIPTION OF THE DRAWINGS

Fig. 1 is a cross-sectional view of a preferred first embodiment of the invention;
Fig. 2 is an explanatory diagram explaining the relationship between a lower casing and a thrust sliding bearing piece in the embodiment of Fig. 1;
Fig. 3 is a cross-sectional view of a preferred second embodiment of the invention;
Fig. 4 is an explanatory diagram of an example in which the embodiment shown in Fig. 2 is incorporated in a strut-type suspension;
Fig. 5 is a cross-sectional view of a preferred third embodiment of the invention;
Fig. 6 is an explanatory diagram explaining the relationship between the lower casing and the thrust sliding bearing piece in the embodiment of Fig. 5;
Fig. 7 is a cross-sectional view of a preferred fourth embodiment of the invention;
Fig. 8 is an explanatory diagram explaining the relationship between the lower casing and the thrust sliding bearing piece in the embodiment of Fig. 7;
Fig. 9 is a cross-sectional view of a preferred fifth embodiment of the invention;
Fig. 10 is an explanatory diagram explaining the relationship between the lower casing and the thrust sliding bearing piece in the embodiment of Fig. 9;
Fig. 11 is a plan view of the thrust sliding bearing piece; and
Fig. 12 is a cross-sectional view of a conventional synthetic resin-made thrust sliding bearing.

BEST MODE FOR CARRYING OUT THE INVENTION

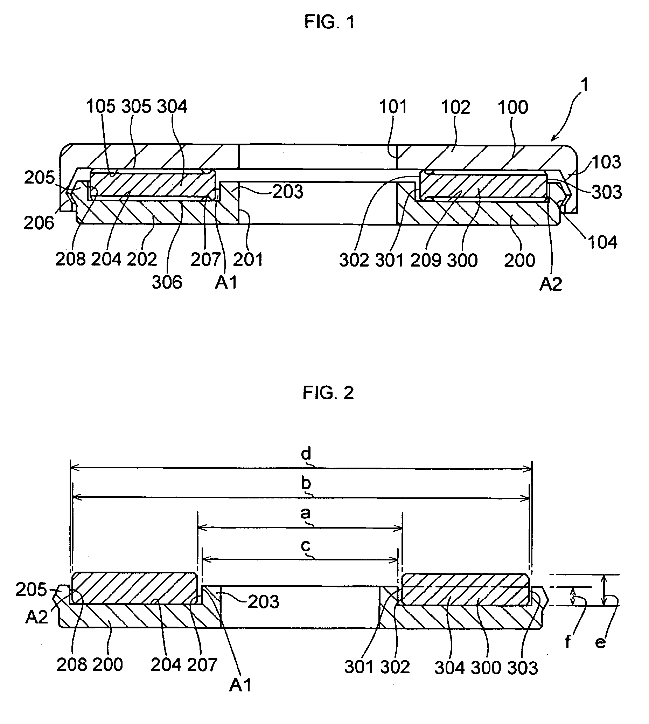

In Figs. 1 and 2, a synthetic resin-made thrust sliding bearing 1 in accordance with a first embodiment of the invention is comprised of a synthetic resin-made upper casing 100, a synthetic resin-made lower casing 200, and a synthetic resin-made thrust sliding bearing piece 300 interposed between the upper and lower casings 100 and 200.

The upper casing 100 includes an annular flat portion 102 having a circular hole 101 in its central portion; a cylindrical engaging suspended portion 103 formed integrally at an outer peripheral edge of the annular flat portion 102;

and an engaging hook portion 104 formed on an inner peripheral surface of an end portion of the cylindrical engaging suspended portion 103.

The lower casing 200 includes an annular flat portion 202 having in its central portion an insertion hole 201 of the same diameter as that of the circular hole 101 of the upper casing 100; a first annular projection 203 having an inside diameter identical to that of the insertion hole 201 and formed integrally on an upper surface of the annular flat portion 202; a second annular projection 205 formed integrally at an outer peripheral edge of the annular flat portion 202 in such a manner as to be radially outwardly spaced apart a predetermined interval from the annular projection 203, so as to form an annular recess 204 in cooperation with that annular projection 203 and the upper surface of the annular flat portion 202; and an engaging portion 206 formed on an outer peripheral surface of a lower end of the annular projection 205.

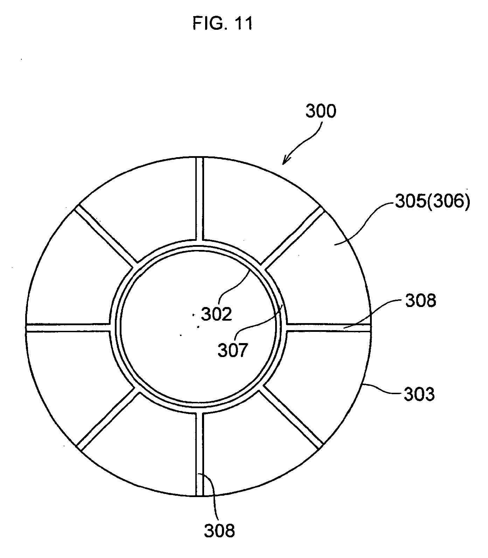

The thrust sliding bearing piece 300 is constituted by a disk 304 which has a circular hole 302 with an inner peripheral surface 301 of an inside diameter larger than the outside diameter of the first annular projection 203 of the lower casing 200 and has an outer peripheral surface 303 with an outside diameter smaller than the inside diameter of the second annular projection 205 of the lower casing 200. The thrust sliding bearing piece 300 is disposed in the annular recess 204 while maintaining an annular clearance A1 between the inner peripheral surface 301 of the circular hole 302 and an outer peripheral surface 207 of the first annular projection 203 of the lower casing 200 and maintaining an annular clearance A2 between the outer peripheral surface 303 of the disk 304 and an inner peripheral surface 208 of the second annular projection 205 of the lower casing 200. Further, the thrust sliding bearing piece 300 is arranged between the upper and lower casings 100 and 200 such that its upper surface 305 projects from an opening of the annular recess 204 of the lower casing 200 so as to be brought into sliding contact with the lower surface 105 of the annular flat portion 102 of the upper casing 100, and such that its lower surface 306 is brought into sliding contact with a bottom surface 209 of the annular recess 204 of the lower casing 200. As shown in Fig. 11, the thrust sliding bearing piece 300 preferably has on each of its upper and lower surfaces 305 and 306 an annular groove 307 which surrounds the circular hole 302, as well as a plurality of radial grooves 308 each having one end open at the annular groove 307 and the other end open at the outer peripheral surface 303 and arranged at equal intervals in the circumferential direction. A lubricant such as grease is filled in these annular grooves 307 and radial grooves 308.

The upper casing 100 is combined with the lower casing 200 by causing the engaging hook portion 104 formed on the inner peripheral surface of an end portion of the cylindrical engaging suspended portion 103 to be resiliently fitted to the engaging portion 206 of the lower casing 200 formed on the outer peripheral surface of a lower end of the second annular projection 205.

Here, as shown in Fig. 2, with the synthetic resin-made thrust sliding bearing 1, if it is assumed that the outside diameter of the outer peripheral surface 207 of the first annular projection 203 is c, the inside diameter of the inner peripheral surface 208 of the second annular projection 205 is d, the diameter of the inner peripheral surface 301 of the circular hole 302 of the thrust sliding bearing piece 300 is a, the diameter of the outer peripheral surface 303 of the disk 304 is b, the thickness of the thrust sliding bearing piece 300 corresponding to the depth (distance from the bottom surface to the opening) of the annular recess 204 of the lower casing 200 is f, and the thickness of the thrust sliding bearing piece 300 is e, then a sum A of volumes of the annular clearances A1 and A2 and a volume B of that portion of the thrust sliding bearing piece 300 which projects from the annular recess 204 are in a relationship of B>A, i.e., $e(b^2 - a^2) > f(d^2 - c^2)$. Such a relational expression can be obtained by a calculating formula shown in "Mathematical Formula 1" below. In consequence, even in cases where a change (decrease) in the thickness due to creep deformation has occurred to the thrust sliding bearing piece 300 in the annular recess 204, the change (decrease) in the thickness is restrained in the annular recess 204, and its further change (decrease) in the thickness is prevented. Further, since the upper surface 305 of the thrust sliding bearing piece 300 constantly projects from the opening of the annular recess 204 of the lower casing 200, the upper and lower casings 100 and 200 can constantly be made to undergo sliding through the thrust sliding bearing piece 300 without shifting to sliding between the upper and lower casings 100 and 200 and without causing interference between the resiliently fitting portions of the engaging hook portion 104 of the cylindrical engaging suspended portion 103 of the upper casing 100 and the engaging portion 206 of the second annular projection 205 of the lower casing 200. Thus, it is possible to maintain the sliding characteristics such as low friction characteristics and wear resistance for extended periods of time.

[Mathematical Formula 1]

(Calculating Formula)

Volume of annular clearance $A1 = (a^2 - c^2) \times \pi \cdot f/4$

Volume of annular clearance $A2 = (d^2 - b^2) \times \pi \cdot f/4$

Annular clearance $A\ (A1 + A2) = (a^2 - c^2 + d^2 - b^2) \times \pi \cdot f/4$

Volume B of the portion of the thrust sliding bearing piece projecting from the opening of the annular recess

$$B = (b^2 - a^2) \times \pi \cdot (e - f)/4$$

From $B > A$, we have $e(b^2 - a^2) > f(d^2 - c^2)$.

As for the upper casing 100 and the lower casing 200, a thermoplastic synthetic resin such as polyacetal resin, polyamide resin, and polyester resin is suitably used. In addition, as the synthetic resin for forming the thrust sliding bearing piece 300, a thermoplastic synthetic resin such as polyamide resin, polyolefin resin, and polyester resin, which excel in the sliding characteristics with respect to the thermoplastic synthetic resin for forming the upper casing 100 and the lower casing 200, is suitably used.

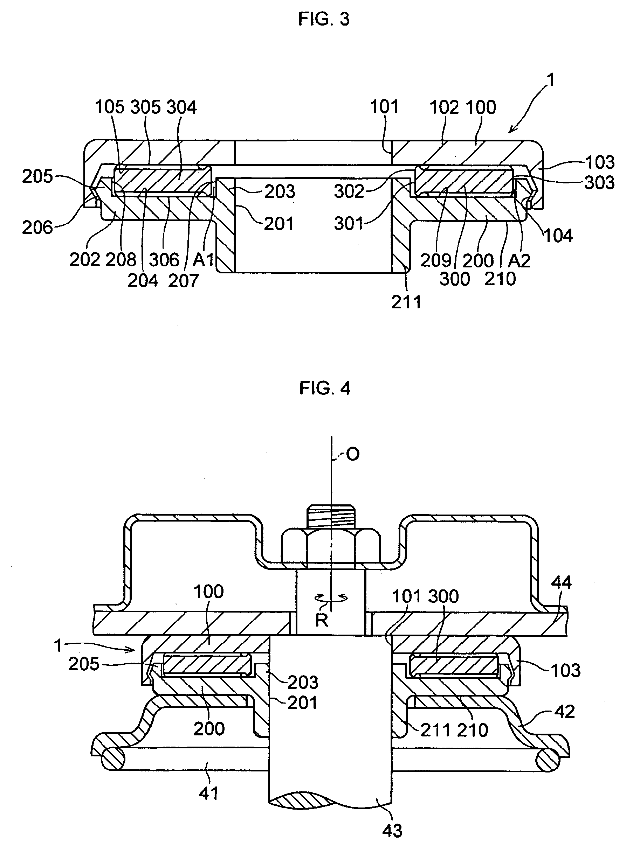

Figs. 3 and 4 show the synthetic resin-made thrust sliding bearing 1 in accordance with a second embodiment of the invention, and this synthetic resin-made thrust sliding bearing 1 has, in addition to the construction of the synthetic resin-made thrust sliding bearing 1 in accordance with the above-described first embodiment, a cylindrical portion 211 which has an inside diameter identical to that of the insertion hole 201 and is formed integrally with a lower surface 210 of the annular flat portion 202 of the lower casing 200.

In the synthetic resin-made thrust sliding bearing 1 having the cylindrical portion 211 on the lower surface 210 of this lower casing 200, when it is installed between an upper spring seat 42 of a coil spring 41 and a mounting member 44 to which a piston rod 43 of a hydraulic damper is secured in a strut-type suspension assembly, such as the one shown in Fig. 4, the installation is facilitated.

In this case, an upper portion of the piston rod 43 is inserted into the circular hole 101 of the upper casing 100 and the insertion hole 201 of the lower casing 200 in the synthetic resin-made thrust sliding bearing 1 so as to be rotatable about an axis O in an R direction with respect to the upper casing 100 and the lower casing 200.

As shown in Fig. 4, in the strut-type suspension assembly installed by means of the synthetic resin-made thrust sliding bearing 1, during the steering operation, the relative rotation of the upper spring seat 42 about the axis O in the R direction through the coil spring 41 is smoothly effected by the relative rotation of the lower casing 200 in the same direction with respect to the upper casing 100.

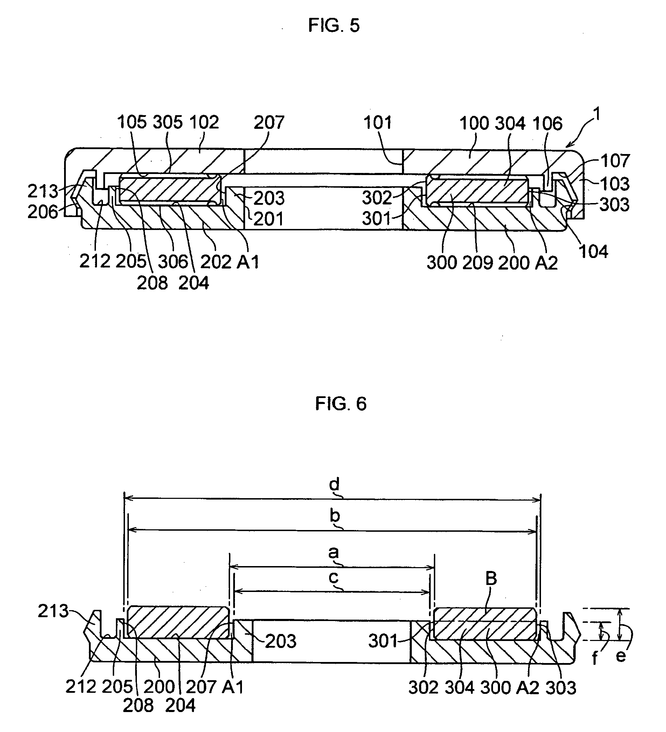

Figs. 5 and 6 show the synthetic resin-made thrust sliding bearing 1 in accordance with a third embodiment of the invention. Such a synthetic resin-made thrust sliding bearing 1 is comprised of the synthetic resin-made upper casing 100, the synthetic resin-made lower casing 200, and the synthetic resin-made thrust sliding bearing piece 300 interposed between the upper and lower casings 100 and 200. The upper casing 100 includes the annular flat portion 102 having the circular hole 101 in its central portion; a cylindrical suspended portion 106 formed integrally with a lower surface 105 of the annular flat portion 102 in such a manner as to be radially outwardly spaced apart a predetermined interval from the peripheral edge of the circular hole 101; the cylindrical engaging suspended portion 103 formed integrally at the outer peripheral edge of the annular flat portion 102 in such a manner as to be radially outwardly spaced apart a predetermined interval from the cylindrical suspended portion 106, so as to form an annular groove 107 in cooperation with that cylindrical suspended portion 106; and the engaging hook portion 104 formed on the inner peripheral surface of the end portion of the cylindrical engaging suspended portion 103. The lower casing 200 includes the annular flat portion 202 having in its central portion the insertion hole 201 of the same diameter as that of the circular hole 101 of the upper casing 100; the first annular projection 203 having an inside diameter identical to that of the insertion hole 201 and formed on the upper surface of the annular flat portion 202; the second annular projection 205 formed on the upper surface of the annular flat portion 202 in such a manner as to be radially outwardly spaced apart a predetermined interval from the annular projection 203, so as to form the annular recess 204 in cooperation with that annular projection 203 and the upper surface of the annular flat portion 202; an cylindrical engaging projecting portion 213 formed integrally at an outer peripheral edge of the annular flat portion 202 in such a manner as to be radially outwardly spaced apart a predetermined interval from that annular projection 205, so as to form an annular groove 212 in cooperation with that annular projection 205; and the engaging portion 206 formed on an outer peripheral surface of a lower end of that cylindrical engaging projecting portion 213. The thrust sliding bearing piece 300 is constituted by the disk 304 which has the circular hole 302 with the inner peripheral surface 301 of an inside diameter larger than the outside diameter of the first annular projection 203 of the lower casing 200 and has the outer peripheral surface 303 with an outside diameter than the inside diameter of the second annular projection 205 of the lower casing 200. The thrust sliding bearing piece 300 is disposed in the annular recess 204 while maintaining the annular clearance A1 between the inner peripheral surface 301 of the circular hole 302 and the outer peripheral surface 207 of the first annular projection 203 of the lower casing 200 and maintaining the annular clearance A2 between the outer peripheral surface 303 of the disk 304 and the inner peripheral surface 208 of the second annular projection 205 of the lower casing 200. Further, the thrust sliding bearing piece 300 is arranged between the upper and lower casings 100 and 200 such that its upper surface 305 projects from the opening of the annular recess 204 of the lower casing 200 so as to be brought into sliding contact with the lower surface 105 of the annular flat portion 102 of the upper casing 100, and such that its lower surface 306 is brought into sliding contact with the bottom surface 209 of the annular recess 204 of the lower casing 200.

Further, the upper casing 100 is combined with the lower casing 200 by causing the end portion of the cylindrical suspended portion 106 to be radially superposed on the end portion of the second annular projection 205 and by causing the engaging hook portion 104 to be resiliently fitted to the engaging portion 206.

Here, as shown in Fig. 6, with the synthetic resin-made thrust sliding bearing 1 in accordance with the third embodiment of the invention, if it is assumed that the outside diameter of the outer peripheral surface 207 of the first annular projection 203 is c, the inside diameter of the inner peripheral surface 208 of the second annular projection 205 is d, the diameter of the inner peripheral surface 301 of the circular hole 302 of the thrust sliding bearing piece 300 is a, the diameter of the outer peripheral surface 303 of the disk 304 is b, the thickness of the thrust sliding bearing piece 300 corresponding to the depth (distance from the bottom surface to the opening) of the annular recess 204 of the lower casing 200 is f, and the thickness of the thrust sliding bearing piece 300 is e, then the sum A of the volumes of the annular clearances A1 and A2 and the volume B of that portion of the thrust sliding bearing piece 300 which projects from the annular recess 204 are in a relationship of B>A, i.e., $e(b^2-a^2)> f(d^2 - c^2)$. In consequence, even in cases where a change (decrease) in the thickness due to creep deformation has occurred to the thrust sliding bearing piece 300 in the annular recess 204, the change (decrease) in the thickness is restrained in the annular recess 204, and its further change (decrease) in the thickness is prevented. Further, since the upper surface 305 of the thrust sliding bearing piece 300 constantly projects from the opening of the annular recess 204 of the lower casing 200, the upper and lower casings 100 and 200 can constantly be made to undergo sliding through the thrust sliding bearing piece 300 without shifting to sliding between the upper and lower casings 100 and 200 and without causing interference between the resiliently fitting portions of the engaging hook portion 104 of the cylindrical engaging suspended portion 103 of the upper casing 100 and the engaging portion 206 of the cylindrical engaging projecting portion 213 of the lower casing 200. Thus, it is possible to maintain the sliding characteristics such as low friction characteristics and wear resistance for extended periods of time.

In addition, with the synthetic resin-made thrust sliding bearing 1 in accordance with the third embodiment, the upper casing 100 is combined with the lower casing 200 by causing the end portion of the cylindrical suspended portion 106 to be radially superposed on the end portion of the second annular projection 205 of the lower casing 200 and by causing the engaging hook portion 104 to be resiliently fitted to the engaging portion 206 of the cylindrical engaging projecting portion 213 of the lower casing 200. Therefore, since sealed portions based on the labyrinth action are formed in the superposed portions of the cylindrical suspended portion 106 and the second annular projection 205 and in the resiliently fitting portions of the engaging hook portion 104 and the engaging portion 206, an operational effect is added in that the entry of foreign objects such as dust between the upper and lower casings 100 and 200 is prevented.

Also with the synthetic resin-made thrust sliding bearing 1 in accordance with the third embodiment, in the same way as the thrust sliding bearing piece 300 of the synthetic resin-made thrust sliding bearing 1 in accordance with the above-described first embodiment, the thrust sliding bearing piece 300 preferably has on each of its upper and lower surfaces 305 and 306 the annular groove 307 which surrounds the circular hole 302, as well as the plurality of radial grooves 308 each having one end open at the annular groove 307 and the other end open at the outer peripheral surface 303 of the disk 304 and arranged at equal intervals in the circumferential direction, as shown in Fig. 11. A lubricant such as grease is filled in these annular grooves 307 and radial grooves 308.

Also with the synthetic resin-made thrust sliding bearing 1 in accordance with the third embodiment, as for the upper casing 100 and the lower casing 200, a thermoplastic synthetic resin such as polyacetal resin, polyamide resin, and polyester resin is suitably used in the same way as the upper casing 100 and the lower casing 200 of the synthetic resin-made thrust sliding bearing 1 in accordance with the above-described first embodiment. In addition, as the synthetic resin for forming the thrust sliding bearing piece 300, a thermoplastic synthetic resin such as polyamide resin, polyolefin resin, and polyester resin, which excel in the sliding characteristics with respect to the thermoplastic synthetic resin for forming the upper casing 100 and the lower casing 200, is suitably used.

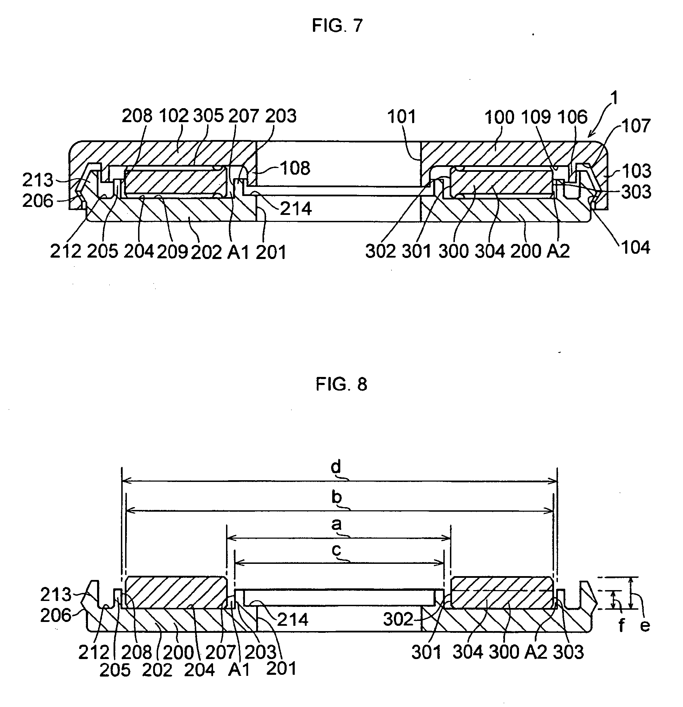

Figs. 7 and 8 show the synthetic resin-made thrust sliding bearing 1 in accordance with a fourth embodiment of the invention. Such a synthetic resin-made thrust sliding bearing 1 is comprised of the synthetic resin-made upper casing 100, the synthetic resin-made lower casing 200, and the synthetic resin-made thrust sliding bearing piece 300 interposed between the upper and lower casings 100 and 200. The upper casing 100 includes the annular flat portion 102 having the circular hole 101 in its central portion; a first cylindrical suspended portion 108 formed integrally with the lower surface of the annular flat portion 102 and having an inside diameter identical to that of the circular hole 101; a second cylindrical suspended portion 106 formed integrally with the lower surface of the annular flat portion 102 in such a manner as to be radially outwardly spaced apart a predetermined interval from the outer peripheral surface of the first cylindrical suspended portion 108, so as to form an annular recess 109 in cooperation with the first cylindrical suspended portion 108 and the lower surface of the annular flat portion 102; the cylindrical engaging suspended portion 103 formed integrally at the outer peripheral edge of the annular flat portion 102 in such a manner as to be radially outwardly spaced apart a predetermined interval from that second cylindrical suspended portion 106, so as to form the annular groove 107 in cooperation with that second cylindrical suspended portion 106; and the engaging hook portion 104 formed on the inner peripheral surface of the end portion of the cylindrical engaging suspended portion 103. The lower casing 200 includes the annular flat portion 202 having in its central portion the insertion hole 201 of the same diameter as that of the circular hole 101 of the upper casing 100; the first annular projection 203 formed integrally on the upper surface of the annular flat portion 202 in such a manner as to be radially outwardly spaced apart from the insertion hole 201 through an annular shoulder portion 214; the second annular projection 205 formed on the upper surface of the annular flat portion 202 in such a manner as to be radially outwardly spaced apart a predetermined interval from the first annular projection 203, so as to form the annular recess 204 in cooperation with that first annular projection 203 and the upper surface of the annular flat portion 202; the cylindrical engaging projecting portion 213 formed integrally at the outer peripheral edge of the annular flat portion 202 in such a manner as to be radially outwardly spaced apart a predetermined interval from the outer peripheral surface of that second annular projection 205, so as to form the annular groove 212 in cooperation with that second annular projection 205 and the upper surface of the annular flat portion 202; and the engaging portion 206 formed on the outer peripheral surface of the lower end of that cylindrical engaging projecting portion 213. The upper casing 100 is combined with the lower casing 200 by causing the end portion of the first cylindrical suspended portion 108 and the end portion of the second cylindrical suspended portion 106 to be radially superposed on the end portion of the first annular projection 203 of the lower casing 200 and the end portion of the second annular projection 205 of the lower casing 200, respectively, and by causing the engaging hook portion 104 to be resiliently fitted to the engaging portion 206 of the lower casing 200.

Here, as shown in Fig. 8, with the synthetic resin-made thrust sliding bearing 1 in accordance with the fourth embodiment of the invention, if it is assumed that the outside diameter of the outer peripheral surface 207 of the first annular projection 203 is c, the inside diameter of the inner peripheral surface 208 of the second annular projection 205 is d, the diameter of the inner peripheral surface 301 of the circular hole 302 of the thrust sliding bearing piece 300 is a, the diameter of the outer peripheral surface 303 of the disk 304 is b, the thickness of the thrust sliding bearing piece 300 corresponding to the depth (distance from the bottom surface 209 to the opening) of the annular recess 204 of the lower casing 200 is f, and the thickness of the thrust sliding bearing piece 300 is e, then the sum A of the volumes of the annular clearances A1 and A2 and the volume B of that portion of the thrust sliding bearing piece 300 which projects from the annular recess 204 are in a relationship of B>A, i.e., $e(b^2-a^2)> f(d^2 - c^2)$. In consequence, even in cases where a change (decrease) in the thickness due to creep deformation has occurred to the thrust sliding bearing piece 300 in the annular recess 204, the change (decrease) in the thickness is restrained in the annular recess 204, and its further change (decrease) in the thickness is prevented. Further, since the upper surface 305 of the thrust sliding bearing piece 300 constantly projects from the opening of the annular recess 204 of the lower casing 200, the upper and lower casings 100 and 200 can constantly be made to undergo sliding through the thrust sliding bearing piece 300 without shifting to sliding between the upper and lower casings 100 and 200 and without causing interference between the resiliently fitting portions of the engaging hook portion 104 of the cylindrical engaging suspended portion 103 of the upper casing 100 and the engaging portion 206 of the cylindrical engaging projecting portion 213 of the lower casing 200. Thus, it is possible to maintain the sliding characteristics such as low friction characteristics and wear resistance for extended periods of time.

With the synthetic resin-made thrust sliding bearing 1 in accordance with the above-described fourth embodiment, the upper casing 100 is combined with the lower casing 200 by causing the end portion of the first cylindrical suspended portion 108 and the end portion of the second cylindrical suspended portion 106 to be radially superposed on the end portion of the first annular projection 203 of the lower casing 200 and the end portion of the second annular projection 205 of the lower casing 200, respectively, and by causing the engaging hook portion 104 to be resiliently fitted to the engaging portion 206 of the lower casing 200. Therefore, on the inner peripheral surface side of the thrust sliding bearing 1, sealed portions based on the labyrinth action are formed in the superposed portions of the first cylindrical suspended portion 108 and the first annular projection 203 of the lower casing 200. Additionally, on the outer peripheral surface side, sealed portions based on the labyrinth action are formed in the superposed portions of the second cylindrical suspended portion 106 and the second annular projection 205 of the lower casing 200 and in the resiliently fitting portions of the engaging hook portion 104 and the engaging portion 206. Therefore, the entry of foreign objects such as dust between the upper and lower casings 100 and 200 is prevented.

Also with the synthetic resin-made thrust sliding bearing 1 in accordance with the fourth embodiment, in the same way as the thrust sliding bearing piece 300 of the synthetic resin-made thrust sliding bearing 1 in accordance with the above-described first embodiment, the thrust sliding bearing piece 300 preferably has on each of its upper and lower surfaces 305 and 306 the annular groove 307 which surrounds the circular hole 302, as well as the plurality of radial grooves 308 each having one end open at the annular groove 307 and the other end open at the cylindrical outer wall surface 303 and arranged at equal intervals in the circumferential direction, as shown in Fig. 11. A lubricant such as grease is filled in these annular grooves 307 and radial grooves 308.

Also with the synthetic resin-made thrust sliding bearing 1 in accordance with the fourth embodiment, as for the upper casing 100 and the lower casing 200, a thermoplastic synthetic resin such as polyacetal resin, polyamide resin, and polyester resin is suitably used in the same way as the upper casing 100 and the lower casing 200 of the synthetic resin-made thrust sliding bearing 1 in accordance with the above-described first embodiment. In addition, as the synthetic resin for forming the thrust sliding bearing piece 300, a thermoplastic synthetic resin such as polyamide resin, polyolefin resin, and polyester resin, which excel in the sliding characteristics with respect to the thermoplastic synthetic resin for forming the upper casing 100 and the lower casing 200, is suitably used.

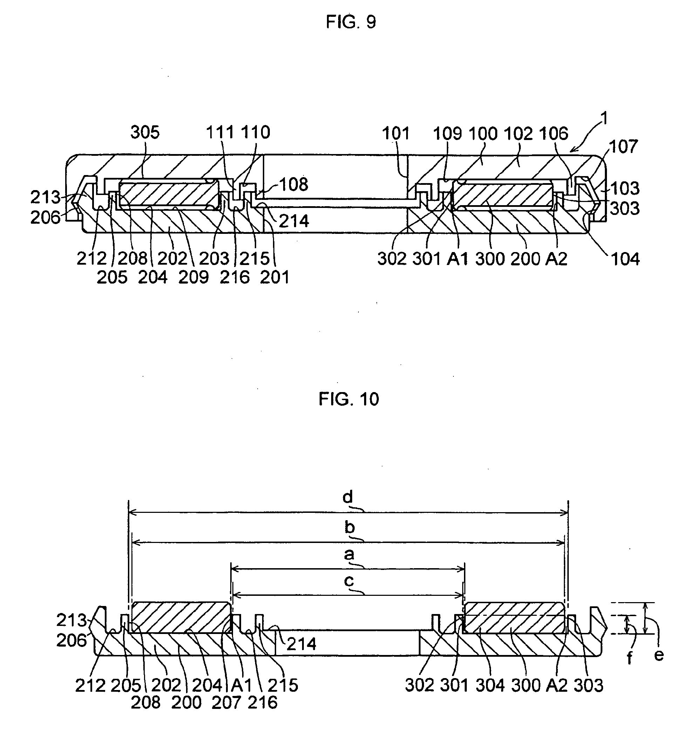

Figs. 9 and 10 show the synthetic resin-made thrust sliding bearing 1 in accordance with a fifth embodiment of the invention. Such a synthetic resin-made thrust sliding bearing 1 is comprised of the synthetic resin-made upper casing 100, the synthetic resin-made lower casing 200, and the synthetic resin-made thrust sliding bearing piece 300 interposed between the upper and lower casings 100 and 200. The upper casing 100 includes the annular flat portion 102 having the circular hole 101 in its central portion; the first cylindrical suspended portion 108 formed integrally with the lower surface of the annular flat portion 102 and having an inside diameter identical to that of the circular hole 101; a second cylindrical suspended portion 111 formed integrally with the lower surface of the annular flat portion 102 in such a manner as to be radially outwardly spaced apart a predetermined interval from the first cylindrical suspended portion 108, so as to form an annular groove 110 in cooperation with the outer peripheral surface of the first cylindrical suspended portion 108; a third cylindrical suspended portion 106 formed integrally with the lower surface of the annular flat portion 102 in such a manner as to be radially outwardly spaced apart a predetermined interval from the second cylindrical suspended portion 111, so as to form the annular recess 109 in cooperation with the second cylindrical suspended portion 111 and the lower surface of the annular flat portion 102; the cylindrical engaging suspended portion 103 formed integrally at the outer peripheral edge of the annular flat portion 102 in such a manner as to be radially outwardly spaced apart a predetermined interval from the third cylindrical suspended portion 106, so as to form the annular groove 107 in cooperation with that third cylindrical suspended portion 106; and the engaging hook portion 104 formed on the inner peripheral surface of the end portion of the cylindrical engaging suspended portion 103. The lower casing 200 includes the annular flat portion 202 having in its central portion the insertion hole 201 of the same diameter as that of the circular hole 101 of the upper casing 100; a cylindrical projecting portion 215 formed integrally on the upper surface of the annular flat portion 202 in such a manner as to be radially outwardly spaced apart from the insertion hole 201 through the annular shoulder portion 214; the first annular projection 203 formed integrally on the upper surface of the annular flat portion 202 in such a manner as to be radially outwardly spaced apart a predetermined interval from the cylindrical projecting portion 215, so as to form an annular groove 216 in cooperation with that cylindrical projecting portion 215; the second annular projection 205 formed on the upper surface of the annular flat portion 202 in such a manner as to be radially outwardly spaced apart a predetermined interval from the first annular projection 203, so as to form the annular recess 204 in cooperation with that first annular projection 203 and the upper surface of the annular flat portion 202; the cylindrical engaging projecting portion 213 formed integrally at the outer peripheral edge of the annular flat portion 202 in such a manner as to be radially outwardly spaced apart a predetermined interval from the second annular projection 205, so as to form the annular groove 212 in cooperation with that second annular projection 205; and the engaging portion 206 formed on the outer peripheral surface of the lower end of that cylindrical engaging projecting portion 213. The upper casing 100 is combined with the lower casing 200 by causing the respective end portions of the first and second cylindrical suspended portions 108 and 111 and the end portion of the third cylindrical suspended portion 106 to be radially superposed on the respective end portions of the cylindrical projecting portion 215 and the first annular projection 203 of the lower casing 200 and the end portion of the second annular projection 205 of the lower casing 200, respectively, and by causing the engaging hook portion 104 to be resiliently fitted to the engaging portion 206 of the lower casing 200.

Here, as shown in Fig. 10, with the synthetic resin-made thrust sliding bearing 1 in accordance with the fifth embodiment of the invention, if it is assumed that the outside diameter of the outer peripheral surface 207 of the first annular projection 203 is c, the inside diameter of the inner peripheral surface 208 of the second annular projection 205 is d, the diameter of the inner peripheral surface 301 of the circular hole 302 of the thrust sliding bearing piece 300 is a, the diameter of the outer peripheral surface 303 of the disk 304 is b, the thickness of the thrust sliding bearing piece 300 corresponding to the depth (distance from the bottom surface 209 to the opening) of the annular recess 204 is f, and the thickness of the thrust sliding bearing piece 300 is e, then the sum A of the volumes of the annular clearances A1 and A2 and the volume B of that portion of the thrust sliding bearing piece 300 which projects from the annular recess 204 are in a relationship of B>A, i.e., $e(b^2 - a^2)> f(d^2 - c^2)$. In consequence, even in cases where a change (decrease) in the thickness due to creep deformation has occurred to the thrust sliding bearing piece 300 in the annular recess 204, the change (decrease) in the thickness is restrained in the annular recess 204, and its further change (decrease) in the thickness is prevented. Further, since the upper surface 305 of the thrust sliding bearing piece 300 constantly projects from the opening of the annular recess 204 of the lower casing 200, the upper and lower casings 100 and 200 can constantly be made to undergo sliding through the thrust sliding bearing piece 300 without shifting to sliding between the upper and lower casings 100 and 200 and without causing interference between the resiliently fitting portions of the engaging hook portion 104 of the cylindrical engaging suspended portion 103 of the upper casing 100 and the engaging portion 206 of the cylindrical engaging projecting portion 213 of the lower casing 200. Thus, it is possible to maintain the sliding characteristics such as low friction characteristics and wear resistance for extended periods of time.

With the synthetic resin-made thrust sliding bearing 1 in accordance with the above-described fifth embodiment, the upper casing 100 is combined with the lower casing 200 by causing the respective end portions of the first, second, and third cylindrical suspended portions 108, 111, and 106 to be radially superposed on the respective end portions of the cylindrical projecting portion 215 and the first and second annular projections 203 and 205 of the lower casing 200, respectively, and by causing the engaging hook portion 104 to be resiliently fitted to the engaging portion 206 of the lower casing 200. Therefore, on the inner peripheral surface side of the synthetic resin-made thrust sliding bearing 1, sealed portions based on the labyrinth action are formed in the superposed portions of the first and second cylindrical suspended portions 108 and 111 and the cylindrical projecting portion 215 and the first annular projection 203 of the lower casing 200. Additionally, on the outer peripheral surface side, sealed portions based on the labyrinth action are formed in the superposed portions of the third cylindrical suspended portion 106 and the second annular projection 205 of the lower casing 200 and in the resiliently fitting portions of the engaging hook portion 104 and the engaging portion 206. Therefore, the entry of foreign objects such as dust between the upper and lower casings 100 and 200 is prevented.

Also with the synthetic resin-made thrust sliding bearing 1 in accordance with the fifth embodiment, in the same way as the thrust sliding bearing piece 300 of the synthetic resin-made thrust sliding bearing 1 in accordance with the above-described first embodiment, the thrust sliding bearing piece 300 preferably has on each of its upper and lower surfaces 305 and 306 the annular groove 307 which surrounds the circular hole 302, as well as the plurality of radial grooves 308 each having one end open at the annular groove 307 and the other end open at the cylindrical outer wall surface 303 and arranged at equal intervals in the circumferential direction, as shown in Fig. 11. A lubricant such as grease is filled in these annular grooves 307 and radial grooves 308.

Also with the synthetic resin-made thrust sliding bearing 1 in accordance with the fifth embodiment, as for the upper casing 100 and the lower casing 200, a thermoplastic synthetic resin such as polyacetal resin, polyamide resin, and polyester resin is suitably used in the same way as the upper casing 100 and the lower casing 200 of the synthetic resin-made thrust sliding bearing 1 in accordance with the above-described first embodiment. In addition, as the synthetic resin for forming the thrust sliding bearing piece 300, a thermoplastic synthetic resin such as polyamide resin, polyolefin resin, and polyester resin, which excel in the sliding characteristics with respect to the thermoplastic synthetic resin for forming the upper casing 100 and the lower casing 200, is suitably used.

In accordance with the second embodiment, in the same way as the synthetic resin-made thrust sliding bearing 1, each of the synthetic resin-made thrust sliding bearings 1 in accordance with the above-described third, fourth, and fifth embodiments may have, in addition to the above-described construction, the cylindrical portion 211 which has an inside diameter identical to that of the insertion hole 201 and is formed integrally with the lower surface 210 of the annular flat portion 202 of the lower casing 200.

As described above, the synthetic resin-made thrust sliding bearing in accordance with the invention is comprised of a synthetic resin-made upper casing, a synthetic resin-made lower casing, and a synthetic resin-made thrust sliding bearing piece interposed between the upper and lower casings. If it is assumed that the outside diameter of the outer peripheral surface of the first annular projection is c, the inside diameter of the inner peripheral surface of the second annular projection is d, the diameter of the inner peripheral surface of the circular hole of the thrust sliding bearing piece is a, the diameter of the outer peripheral surface of the disk is b, the thickness of the thrust sliding bearing piece corresponding to the depth (distance from the bottom surface to the opening) of the annular recess is f, and the thickness of the thrust sliding bearing piece is e, then the sum A of the volumes of the annular clearances A1 and A2 and the volume B of that portion of the thrust sliding bearing piece which projects from the annular recess are in a relationship of B > A, i.e., $e(b^2-a^2)> f(d^2-c^2)$. In consequence, even in cases where a change (decrease) in the thickness due to creep deformation has occurred to the thrust sliding bearing piece in the annular recess, the change (decrease) in the thickness is restrained in the annular recess, and its further change (decrease) in the thickness is prevented. Further, since the upper surface of the thrust sliding bearing piece constantly projects from the opening of the annular recess of the lower casing, the upper and lower casings can constantly be made to undergo sliding through the thrust sliding bearing piece without shifting to sliding between the upper and lower casings and without causing interference between the resiliently fitting portions of the engaging hook portion of the cylindrical engaging suspended portion of the upper casing and the engaging portion of the second annular projection of the lower casing. Thus, it is possible to maintain the sliding characteristics such as low friction characteristics and wear resistance for extended periods of time.

## Claims

1. A synthetic resin-made thrust sliding bearing comprising:

an upper casing (100) having an annular flat portion (102);
a lower casing (200) which is superposed on said upper casing (100) so as to be rotatable about an axis of said upper casing (100), and has an annular flat portion (202) opposed to the annular flat portion (102) of said upper casing (100) and an annular recess (204) formed in the annular flat portion (202) and surrounded by concentric first and second annular projections (203, 205) of said lower casing (200); and
a synthetic resin-made thrust sliding bearing piece (300) constituted by a disk (304) which is disposed in the annular recess (204) of said lower casing (200), is brought into sliding contact with the annular flat portion (102) of said upper casing (100), and has a circular hole (302) in a central portion thereof, said disk (304) having the substantially same cross section dimension all around,
said thrust sliding bearing piece (300) being disposed in the annular recess (204) via an annular clearance (A1) between an inner peripheral surface (301) of the circular hole (302) and an outer peripheral surface (207) of the first annular projection (203) of said lower casing (200) and an annular clearance (A2) between an outer peripheral surface (303) of the disk (304) and an inner peripheral surface (208) of the second annular projection (205) of said lower casing (200), and being disposed in the annular recess (204) such that an upper surface (305) thereof is brought into sliding contact with a lower surface (105) of said upper casing (100) to have a portion projecting outside the annular recess (204), and such that a lower surface (306) thereof is brought into sliding contact with a bottom surface (209) of the annular recess (204) of said lower casing (200),
said upper casing (100) being combined with said lower casing (200) by being resiliently fitted to said lower casing (200),

**characterized in that**,
wherein if it is assumed that an outside diameter of the outer peripheral surface (207) of the first annular projection (203) is c, an inside diameter of the inner peripheral surface (208) of the second annular projection (205) is d, a diameter of the inner peripheral surface (301) of the circular hole (302) of said thrust sliding bearing piece (300) is a, a diameter of the outer peripheral surface (303) of the disk (304) is b, a thickness of said thrust sliding bearing piece (300) corresponding to a depth of the annular recess (204) from the bottom surface (209) to the opening thereof is f, and a thickness of said thrust sliding bearing piece (300) is e, then a sum (A) of volumes of the annular clearances (A1) and (A2) and a volume (B) of that portion of said thrust sliding bearing piece (300) which projects outside the annular recess (204) of the lower casing (200) are in a relationship of B>A shown by the formula $e(b^2 - a^2) > f(d^2-c^2)$.

2. The synthetic resin-made thrust sliding bearing according to claim 1, wherein said upper casing (100) includes:

the annular flat portion (102) having a circular hole (101) in a central portion thereof;
a cylindrical engaging suspended portion (103) formed integrally at an outer peripheral edge of the annular flat portion (102); and
an engaging hook portion (104) formed on an inner peripheral surface of an end portion of the cylindrical engaging suspended portion (103), and
wherein said lower casing (200) includes:

the annular flat portion (202) having in a central portion thereof an insertion hole (201) of a same diameter as that of the circular hole (101) of said upper casing (100);
the first annular projection (203) having an inside diameter identical to that of the insertion hole (201) and formed integrally on an upper surface of the annular flat portion (202);
the second annular projection (205) formed integrally at an outer peripheral edge of the annular flat portion (202) in such a manner as to be radially outwardly spaced apart a predetermined interval from the first annular projection (203), so as to form the annular recess (204) in cooperation with the first annular projection (203) and the upper surface of the annular flat portion (202); and

an engaging portion (206) formed on an outer peripheral surface of a lower end of the second annular projection (205),

said upper casing (100) being combined with said lower (200) casing by causing the engaging hook portion (104) to be resiliently fitted to the engaging portion (206) of said lower casing (200).

3. The synthetic resin-made thrust sliding bearing according to claim 1, wherein said upper casing (100) includes:

the annular flat portion (102) having a circular hole(101) in a central portion thereof;

a cylindrical suspended portion (106) formed integrally with a lower surface of the annular flat portion (102) in such a manner as to be radially outwardly spaced apart a predetermined interval from a peripheral edge of the circular hole (101);

a cylindrical engaging suspended portion (103) formed integrally at an outer peripheral edge of the annular flat portion (102) in such a manner as to be radially outwardly spaced apart a predetermined interval from the cylindrical suspended portion (106), so as to form an annular groove (107) in cooperation with the cylindrical suspended portion (106); and

an engaging hook portion (104) formed on an inner peripheral surface of an end portion of the cylindrical engaging suspended portion (103), and

wherein said lower casing (200) includes:

the annular flat portion (202) having in a central portion thereof an insertion hole (201) of a same diameter as that of the circular hole (101) of said upper casing (100);

the first annular projection (203) having an inside diameter identical to that of the insertion hole (201) and formed on an upper surface of the annular flat portion (202);

the second annular projection (205) formed on the upper surface of the annular flat portion (202) in such a manner as to be radially outwardly spaced apart a predetermined interval from the first annular projection (203), so as to form the annular recess (204) in cooperation with the first annular projection (203) and the upper surface of the annular flat portion (202);

a cylindrical engaging projecting portion (213) formed integrally at an outer peripheral edge of the annular flat portion (202) in such a manner as to be radially outwardly spaced apart a predetermined interval from the second annular projection (205), so as to form an annular groove (212) in cooperation with the second annular projection (205); and

an engaging portion (206) formed on an outer peripheral surface of a lower end of the cylindrical engaging projecting portion (213),

said upper casing (100) being combined with said lower casing (200) by causing an end portion of the cylindrical suspended portion (106) to be radially superposed on an end portion of the second annular projection (205) and by causing the engaging hook portion (104) to be resiliently fitted to the engaging portion (206).

4. The synthetic resin-made thrust sliding bearing according to claim 1, wherein said upper casing (100) includes:

the annular flat portion (102) having a circular hole (101) in a central portion thereof;

a first cylindrical suspended portion (108) formed integrally with a lower surface of the annular flat portion (102) and having an inside diameter identical to that of the circular hole (101);

a second cylindrical suspended portion (106) formed integrally with the lower surface of the annular flat portion (102) in such a manner as to be radially outwardly spaced apart a predetermined interval from an outer peripheral surface of the first cylindrical suspended portion (108), so as to form an annular recess (204) in cooperation with the first cylindrical suspended portion (108) and the lower surface of the annular flat portion (102);

a cylindrical engaging suspended portion (103) formed integrally at an outer peripheral edge of the annular flat portion (102) in such a manner as to be radially outwardly spaced apart a predetermined interval from the second cylindrical suspended portion (106), so as to form an annular groove (109) in cooperation with the second cylindrical suspended portion (106); and

an engaging hook portion (104) formed on an inner peripheral surface of an end portion of the cylindrical engaging suspended portion (103), and

wherein said lower casing (200) includes:

the annular flat portion (202) having in a central portion thereof an insertion hole (201) of a same diameter as that of the circular hole (101) of said upper casing (100);

the first annular projection (203) formed integrally on an upper surface of the annular flat portion (202) in such a manner as to be radially outwardly spaced apart from the insertion hole (201) through an annular shoulder portion (214);

the second annular projection (205) formed on the upper surface of the annular flat portion (202) in such a manner as to be radially outwardly spaced apart a predetermined interval from the first annular projection (203), so as to form the annular recess (204) in cooperation with the first annular projection (202) and the upper surface of the annular flat portion (202);

a cylindrical engaging projecting portion (213) formed integrally at an outer peripheral edge of the annular flat portion (202) in such a manner as to be radially outwardly spaced apart a predetermined interval from an outer peripheral surface of the second annular projection (205), so as to form an annular groove (212) in cooperation with the second annular projection (205) and the upper surface of the annular flat portion (202); and

an engaging portion (206) formed on an outer peripheral surface of a lower end of the cylindrical engaging projecting portion (213),

said upper casing (100) being combined with said lower casing (200) by causing an end portion of the first cylindrical suspended portion (108) and an end portion of the second cylindrical suspended portion (106) to be radially superposed on an end portion of the first annular projection (203) and an end portion of the second annular projection (205), respectively, and by causing the engaging hook portion (104) to be resiliently fitted to the engaging portion (206).

5. The synthetic resin-made thrust sliding bearing according to claim 1, wherein said upper casing (100) includes:

the annular flat portion (102) having a circular hole (101) in a central portion thereof;
a first cylindrical suspended portion (108) formed integrally with a lower surface of the annular flat portion (102) and having an inside diameter identical to that of the circular hole (101);
a second cylindrical suspended portion (106) formed integrally with the lower surface of the annular flat portion (102) in such a manner as to be radially outwardly spaced apart a predetermined interval from the first cylindrical suspended portion (108), so as to form an annular groove (109) in cooperation with an outer peripheral surface of the first cylindrical suspended portion (108);
a third cylindrical suspended portion (106) formed integrally with the lower surface of the annular flat portion (102) in such a manner as to be radially outwardly spaced apart a predetermined interval from the second cylindrical suspended portion (106), so as to form the annular recess (204) in cooperation with the second cylindrical suspended portion (106) and the lower surface of the annular flat portion (102);
a cylindrical engaging suspended portion (103) formed integrally at an outer peripheral edge of the annular flat portion (102) in such a manner as to be radially outwardly spaced apart a predetermined interval from the third cylindrical suspended portion (106), so as to form an annular groove (107) in cooperation with the third cylindrical suspended portion (106); and
an engaging hook portion (104) formed on an inner peripheral surface of an end portion of the cylindrical engaging suspended portion (103), and
wherein said lower casing (200) includes:

the annular flat portion (202) having in a central portion thereof an insertion hole (201) of a same diameter as that of the circular hole (101) of said upper casing (100);
a cylindrical projecting portion (215) formed integrally on an upper surface of the annular flat portion (202) in such a manner as to be radially outwardly spaced apart from the insertion hole (201) through an annular shoulder portion (214);
the first annular projection (203) formed integrally on the upper surface of the annular flat portion (202) in such a manner as to be radially outwardly spaced apart a predetermined interval from the cylindrical projecting portion (215), so as to form an annular groove (216) in cooperation with the cylindrical projecting portion (215);
the second annular projection (205) formed on the upper surface of the annular flat portion (202) in such a manner as to be radially outwardly spaced apart a predetermined interval from the first annular projection (203), so as to form the annular recess (204) in cooperation with the first annular projection (203) and the upper surface of the annular flat portion (202);
a cylindrical engaging projecting portion (213) formed integrally at an outer peripheral edge of the annular flat portion (202) in such a manner as to be radially outwardly spaced apart a predetermined interval from the second annular projection (205), so as to form an annular groove (212) in cooperation with the second annular projection (205); and
an engaging portion (206) formed on an outer peripheral surface of a lower end of the cylindrical engaging projecting portion (213),

said upper casing (100) being combined with said lower casing (200) by causing respective end portions of the first cylindrical suspended portion (108) and the second cylindrical suspended portion (106) and an end portion of the third cylindrical suspended portion (106) to be radially superposed on respective end portions of the cylindrical projecting portion (215) and the first annular projection (203) and an end portion of the second annular projection (205), respectively, and by causing the engaging hook portion (104) to be resiliently fitted to the engaging portion (206).

6. The synthetic resin-made thrust sliding bearing according to any one of claims 1 to 5, wherein said thrust sliding bearing piece (300) has on each of the upper and lower surfaces (305, 306) thereof an annular groove (307) which surrounds the circular hole (101) and a plurality of radial grooves (308) each having one end open at the annular groove (307) and another end open at the outer peripheral surface (303) and arranged at equal intervals in a circumferential direction.

7. The synthetic resin-made thrust sliding bearing according to any one of claims 1 to 6, wherein said lower casing (200) has a cylindrical portion (211) formed integrally on a lower surface thereof and having an inside diameter identical to that of the insertion hole (201).

**Patentansprüche**

1. Kunstharz-Axialgleitlager, umfassend:

ein oberes Gehäuse (100) mit einem ringförmigen flachen Abschnitt (102);

ein unteres Gehäuse (200), welches das obere Gehäuse (100) überlagert, so dass es um eine Achse des oberen Gehäuses (100) drehbar ist, und einen ringförmigen flachen Abschnitt (202) aufweist, der dem ringförmigen flachen Abschnitt (102) des oberen Gehäuses (100) gegenüber liegt, sowie eine ringförmige Ausnehmung (204), die in dem ringförmigen flachen Abschnitt (202) ausgebildet und von konzentrischen ersten und zweiten ringförmigen Vorsprüngen (203, 205) des unteren Gehäuses (200) umgeben ist; und

ein Axialgleitlagerteil (300) aus synthetischem Harz, das von einer Scheibe (304) gebildet ist, die in der ringförmigen Ausnehmung (204) des unteren Gehäuses (200) angeordnet ist, die in gleitenden Kontakt mit dem ringförmigen flachen Abschnitt (102) des oberen Gehäuses (100) gebracht ist und die ein kreisförmiges Loch (302) an einem zentralen Bereich aufweist, wobei die Scheibe (304) umlaufend den im Wesentlichen gleichen Querschnitt aufweist, wobei das Axialgleitlagerteil (300) durch eine ringförmige Lücke (A1) zwischen einer inneren Umfangsfläche (301) des kreisförmigen Lochs (302) und einer äußeren Umfangsfläche (207) des ersten ringförmigen Vorsprungs (203) des unteren Gehäuses (200) und eine ringförmige Lücke (A2) zwischen einer äußeren Umfangsfläche (303) der Scheibe (304) und einer inneren Umfangsfläche (208) des zweiten ringförmigen Vorsprungs (205) des unteren Gehäuses (200) derart in der ringförmigen Ausnehmung (204) angeordnet ist, dass eine obere Fläche (305) mit einer unteren Fläche (105) des oberen Gehäuses (100) in gleitenden Kontakt gebracht ist, um einen Abschnitt aufzuweisen, der über die ringförmige Ausnehmung (204) nach außen vorsteht, und derart, dass eine untere Fläche (306) in gleitenden Kontakt mit einer Bodenfläche (209) der ringförmigen Ausnehmung (204) des unteren Gehäuses (200) gebracht ist,

und das obere Gehäuse (100) mit dem unteren Gehäuse (200) zusammengefügt ist, indem es elastisch am unteren Gehäuse (200) angebracht wird,

**dadurch gekennzeichnet,**

**dass**, wenn vorausgesetzt wird, dass ein äußerer Durchmesser der äußeren Umfangsfläche (207) des ersten ringförmigen Vorsprungs (203) c ist, ein innerer Durchmesser der inneren Umfangsfläche (208) des zweiten ringförmigen Vorsprungs (205) d ist, ein Durchmesser der inneren Umfangsfläche (301) des kreisförmigen Lochs (302) des Axialgleitlagerteils (300) a ist, ein Durchmesser der äußeren Umfangsfläche (303) der Scheibe (304) b ist, eine Dicke des Axialgleitlagerteils (300) entsprechend einer Tiefe der ringförmigen Ausnehmung (204) von der Bodenfläche (209) bis zur Öffnung f ist und eine Dicke des Axialgleitlagerteils (300) e ist, dann eine Summe (A) der Volumen der ringförmigen Lücken (A1) und (A2) und ein Volumen (B) des Abschnitts des Axialgleitlagerteils (300), welcher aus der ringförmigen Ausnehmung (204) des unteren Gehäuses (200) ragt, in einem Verhältnis von B>A stehen, ausgedrückt durch die Formel $(b^2 - a^2) > f(d^2 - c^2)$.

2. Kunstharz-Axialgleitlager nach Anspruch 1,
wobei das obere Gehäuse (100) umfasst:

den ringförmigen flachen Abschnitt (102) mit einem kreisförmigen Loch (101) an einem zentralen Bereich; einen zylindrischen eingreifenden aufgehängten Abschnitt (103), der einstückig an einem äußeren Umfangsrand des ringförmigen flachen Abschnitts (102) gebildet ist; und einen Eingriffshakenabschnitt (104), der an einer inneren Umfangsfläche eines Endabschnitts des zylindrischen eingreifenden aufgehängten Abschnitts (103) gebildet ist, und wobei das untere Gehäuse (200) umfasst:

den ringförmigen flachen Abschnitt (202) aufweist, der an einer zentralen Stelle ein Einsteckloch (201) mit einem mit dem des kreisförmigen Lochs (101) des oberen Gehäuses (100) identischen Durchmesser aufweist;

den ersten ringförmigen Vorsprung (203), der einen mit dem des Einstecklochs (201) identischen Durchmesser aufweist und einstückig auf einer oberen Fläche des ringförmigen flachen Abschnitts (202) geformt ist;

den zweiten ringförmigen Vorsprung (205), der einstückig an einem äußeren Umfangsrand des ringförmigen flachen Abschnitts (202) so gebildet ist, dass er radial nach außen mit einer vorbestimmten Entfernung vom ersten ringförmigen Vorsprung (203) beabstandet ist, so dass er zusammen mit dem ersten ringförmigen Vorsprung (203) und der oberen Fläche des ringförmigen flachen Abschnitts (202) die ringförmige Ausnehmung (204) bildet; und

einen Eingriffsabschnitt (206), der auf einer äußeren Umfangsfläche eines unteren Endes des zweiten ringförmigen Vorsprungs (205) gebildet ist, wobei das obere Gehäuse (100) mit dem unteren (200) Gehäuse zusammengefügt wird, indem der Eingriffshakenabschnitt (104) elastisch am Eingriffsabschnitt (206) des unteren Gehäuses (200) angebracht ist.

3. Kunstharz-Axialgleitlager nach Anspruch 1, wobei das obere Gehäuse (100) umfasst:

den ringförmigen flachen Abschnitt (102) mit einem kreisförmigen Loch (101) an einem zentralen Bereich; einen zylindrischen aufgehängten Abschnitt (106), der einstückig mit einer unteren Fläche des ringförmigen flachen Abschnitts (102) so gebildet ist, dass er radial nach außen mit einer vorbestimmten Entfernung von einem Umfangsrand des kreisförmigen Lochs (101) beabstandet ist; einen zylindrischen eingreifenden aufgehängten Abschnitt (103), der einstückig an einem äußeren Umfangsrand des ringförmigen flachen Abschnitts (102) so gebildet ist, dass er radial nach außen mit einer vorbestimmten Entfernung vom zylindrischen aufgehängten Abschnitt (106) beabstandet ist, so dass er zusammen mit dem zylindrischen aufgehängten Abschnitt (106) eine ringförmige Nut (107) bildet; und einen Eingriffshakenabschnitt (104), der an einer inneren Umfangsfläche eines Endabschnitts des zylindrischen eingreifenden aufgehängten Abschnitts (103) ausgebildet ist, und wobei das untere Gehäuse (200) umfasst:

den ringförmigen flachen Abschnitt (202), der an einer zentralen Stelle ein Einsteckloch (201) mit dem gleichen Durchmesser wie dem des kreisförmigen Lochs (101) des oberen Gehäuses (100) aufweist;

den ersten ringförmigen Vorsprung (203), der einen mit dem des Einstecklochs (201) identischen inneren Durchmesser aufweist und an einer oberen Fläche des ringförmigen flachen Abschnitts (202) gebildet ist;

den zweiten ringförmigen Vorsprung (205), der an der oberen Fläche des ringförmigen flachen Abschnitts (202) so gebildet ist, dass er radial nach außen mit einer vorbestimmten Entfernung vom ersten ringförmigen Vorsprung (203) beabstandet ist, so dass er zusammen mit dem ersten ringförmigen Vorsprung (203) und der oberen Fläche des ringförmigen flachen Abschnitts (202) die ringförmige Ausnehmung (204) bildet;

einen zylindrischen eingreifenden hervorspringenden Abschnitt (213), der einstückig an einem äußeren Umfangsrand des ringförmigen flachen Abschnitts (202) so gebildet ist, dass er radial nach außen mit einer vorbestimmten Entfernung vom zweiten ringförmigen Vorsprung (205) beabstandet ist, so dass er zusammen mit dem zweiten ringförmigen Vorsprung (205) eine ringförmige Nut (212) bildet; und

einen Eingriffsabschnitt (206), der an einer äußeren Umfangsfläche eines unteren Endes des zylindrischen eingreifenden vorspringenden Abschnitts (213) gebildet ist, wobei das obere Gehäuse (100) mit dem unteren Gehäuse (200) zusammengefügt ist, indem ein Endabschnitt des zylindrischen aufgehängten Abschnitts (106) an einem Endabschnitt des zweiten ringförmigen Vorsprungs (205) überlagert ist und indem der Eingriffshakenabschnitt (104) elastisch am Eingriffsabschnitt (206) angebracht ist.

4. Kunstharz-Axialgleitlager nach Anspruch 1,

wobei das obere Gehäuse (100) umfasst:

den ringförmigen flachen Abschnitt (102) mit einem kreisförmigen Loch (101) in einem zentralen Bereich;
einen ersten zylindrischen aufgehängten Abschnitt (108), der einstückig mit einer unteren Fläche des ringförmigen flachen Abschnitts (102) gebildet ist und einen mit dem des kreisförmigen Lochs (101) identischen Durchmesser hat;
einen zweiten zylindrischen aufgehängten Abschnitt (106), der einstückig mit einer unteren Fläche des ringförmigen flachen Abschnitts (102) so gebildet ist, dass er radial nach außen mit einer vorbestimmten Entfernung von einer äußeren Umfangsfläche des ersten zylindrischen aufgehängten Abschnitts (108) beabstandet ist, so dass er zusammen mit dem ersten zylindrischen aufgehängten Abschnitt (108) und der unteren Fläche des ringförmigen flachen Abschnitts (102) eine ringförmige Ausnehmung (204) bildet;
einen zylindrischen eingreifenden aufgehängten Abschnitt (103), der einstückig an einem äußeren Umfangsrand des ringförmigen flachen Abschnitts (102) so gebildet ist, dass er radial nach außen mit einer vorbestimmten Entfernung vom zweiten zylindrischen aufgehängten Abschnitt (106) beabstandet ist, so dass er zusammen mit dem zweiten zylindrischen aufgehängten Abschnitt (106) eine ringförmige Nut (109) bildet; und
einen Eingriffshakenabschnitt (104), der an einer inneren Umfangsfläche eines Endabschnitts des zylindrischen eingreifenden aufgehängten Abschnitts (103) gebildet ist, und
wobei das untere Gehäuse (200) umfasst:

den ringförmigen flachen Abschnitt (202), der in einem zentralen Bereich ein Einsteckloch (201) mit dem gleichen Durchmesser wie dem des kreisförmigen Lochs (101) des oberen Gehäuses (100) aufweist;
den ersten ringförmigen Vorsprung (203), der einstückig an einer oberen Fläche des ringförmigen flachen Abschnitts (202) so gebildet ist, dass er radial nach außen durch einen ringförmigen Absatzabschnitt (214) vom Einsteckloch (201) beabstandet ist;
den zweiten ringförmigen Vorsprung (205), der an der oberen Fläche des ringförmigen flachen Abschnitts (202) so ausgebildet ist, dass er radial nach außen mit einer vorbestimmten Entfernung vom ersten ringförmigen Vorsprung (203) beabstandet ist, so dass er zusammen mit dem ersten ringförmigen Vorsprung (202) und der oberen Fläche des ringförmigen flachen Abschnitts (202) die ringförmige Ausnehmung (204) bildet;
einen zylindrischen eingreifenden vorspringenden Abschnitt (213), der integral an einem äußeren Umfangsrand des ringförmigen flachen Abschnitts (202) so gebildet ist, dass er radial nach außen mit einer vorbestimmten Entfernung von einer äußeren Umfangsfläche des zweiten ringförmigen Vorsprungs (205) beabstandet ist, so dass er zusammen mit dem zweiten ringförmigen Vorsprung (205) und der oberen Fläche des ringförmigen flachen Abschnitts (202) eine ringförmige Nut (212) bildet; und
einen Eingriffsabschnitt (206), der an einer äußeren Umfangsfläche eines unteren Endes des zylindrischen eingreifenden vorspringenden Abschnitts (213) gebildet ist,
wobei das obere Gehäuse (100) mit dem unteren Gehäuse (200) zusammengefügt ist, indem jeweils ein Endabschnitt des ersten zylindrischen aufgehängten Abschnitts (108) und ein Endabschnitt des zweiten zylindrischen aufgehängten Abschnitts (106) an einem Endabschnitt des ersten ringförmigen Vorsprungs (203) und einem Endabschnitt des zweiten ringförmigen Vorsprungs (205) überlagert ist und indem der Eingriffshakenabschnitt (104) elastisch am Eingriffsabschnitt (206) angebracht ist.

5.  Kunstharz-Axialgleitlager nach Anspruch 1,
    wobei das obere Gehäuse (100) umfasst:

den ringförmigen flachen Abschnitt (102) mit einem kreisförmigen Loch (101) an einer zentralen Stelle;
einen ersten zylindrischen aufgehängten Abschnitt (108), der einstückig mit einer unteren Fläche des ringförmigen flachen Abschnitts (102) gebildet ist und
einen mit dem des kreisförmigen Lochs (101) identischen inneren Durchmesser hat;
einen zweiten zylindrischen aufgehängten Abschnitt (106), der einstückig mit einer unteren Fläche des ringförmigen flachen Abschnitts (102) so gebildet ist,
dass er radial nach außen mit einer vorbestimmten Entfernung vom ersten zylindrischen aufgehängten Abschnitts (108) beabstandet ist, so dass er zusammen mit einer äußeren Umfangsfläche des ersten zylindrischen aufgehängten Abschnitts (108) eine ringförmige Rille (109) bildet,
einen dritten zylindrischen aufgehängten Abschnitt (106), der einstückig mit der unteren Fläche des ringförmigen flachen Abschnitts (102) so gebildet ist, dass er radial nach außen mit einer vorbestimmten Entfernung vom zweiten zylindrischen aufgehängten Abschnitt (106) beabstandet ist, so dass er zusammen mit dem zweiten zylindrischen aufgehängten Abschnitt (106) und der unteren Fläche des ringförmigen flachen Abschnitts (102) die ringförmige Ausnehmung (204) bildet;
einen zylindrischen eingreifenden aufgehängten Abschnitt (103), der einstückig an einem äußeren Umfangsrand des ringförmigen flachen Abschnitts (102) so gebildet ist, dass er radial nach außen mit einer vorbestimmten Entfernung vom dritten zylindrischen aufgehängten Abschnitt (106) beabstandet ist, so dass er zusammen mit dem dritten zylindrischen aufgehängten Abschnitt (106) eine ringförmige Rille (107) bildet; und
einen Eingriffshakenabschnitt (104), der an einer inneren Umfangsfläche eines Endabschnitts des zylindrischen eingreifenden aufgehängten Abschnitts (103) ausgebildet ist, und
wobei das untere Gehäuse (200) umfasst:

den ringförmigen flachen Abschnitt (202), der in einem zentralen Bereich ein Einsteckloch (201) mit dem gleichen Durchmesser wie dem des ringförmigen Lochs (101) des oberen Gehäuses (100) aufweist;
einen zylindrischen vorspringenden Abschnitt (215), der einstückig an einer oberen Fläche des ringförmigen flachen Abschnitts (202) so gebildet ist, dass er radial nach außen durch einen ringförmigen Absatzabschnitt (214) vom Einsteckloch (201) beabstandet ist;
den ersten ringförmigen Vorsprung (203), der einstückig an der oberen Fläche des ringförmigen flachen Abschnitts (202) so gebildet ist, dass er radial nach außen mit einer vorbestimmten Entfernung vom zylindrischen vorspringenden Abschnitt (215) beabstandet ist, so dass er zusammen mit dem zylindrischen vorspringenden Abschnitt (215) eine ringförmige Nut (216) bildet;
den zweiten ringförmigen Vorsprung (205), der an der oberen Fläche des ringförmigen flachen Abschnitts (202) so gebildet ist, dass er radial nach außen mit einer vorbestimmten Entfernung vom ersten ringförmigen Vorsprung (203) beabstandet ist, so dass er zusammen mit dem ersten ringförmigen Vorsprung (203) und der oberen Fläche des ringförmigen flachen Abschnitts (202) die ringförmige Ausnehmung (204) bildet;
einen zylindrischen eingreifenden vorspringenden Abschnitt (213), der einstückig an einem äußeren Umfangsrand des ringförmigen flachen Abschnitts (202) so gebildet ist, dass er radial nach außen mit einer vorbestimmten Entfernung vom zweiten ringförmigen Vorsprung (205) beabstandet ist, so dass er zusammen mit dem zweiten ringförmigen Vorsprung (205) eine ringförmige Nut (212) bildet; und
einen Eingriffsabschnitt (206), der an einer äußeren Umfangsfläche eines unteren Endes des zylindrischen eingreifenden vorspringenden Abschnitts (213) ausgebildet ist,
wobei das obere Gehäuse (100) mit dem unteren Gehäuse (200) zusammengefügt wird, indem jeweilige Endabschnitte des ersten zylindrischen aufgehängten Abschnitts (108) und des zweiten zylindrischen aufgehängten Abschnitts (106) und ein Endabschnitt des dritten zylindrischen aufgehängten Abschnitts (106) an jeweiligen Endabschnitten des zylindrischen vorspringenden Abschnitts (215) und des ersten ringförmigen Vorsprungs (203) und einem Endabschnitt des zweiten ringförmigen Vorsprungs (205) radial überlagert sind und indem der Eingriffshakenabschnitt (104) elastisch am Eingriffsabschnitt (206) angebracht ist.

6. Kunstharz-Axialgleitlager nach einem der Ansprüche 1 bis 5,
wobei das Axialgleitlagerteil (300) an jeder der oberen und unteren Flächen (305, 306) eine ringförmige Nut (307) aufweist, die das ringförmige Loch (101) umgibt und eine Vielzahl von radialen Nuten (308), welche jeweils ein an der ringförmigen Nut (307) offenes Ende haben sowie ein weiteres Ende, das an der äußeren Umfangsfläche (303) offen ist und in regelmäßigen Abständen in einer umfänglichen Richtung angeordnet ist.

7. Kunstharz-Axialgleitlager nach einem der Ansprüche 1 bis 6,
wobei das untere Gehäuse (200) einen zylindrischen Abschnitt (211) aufweist, der einstückig an einer unteren Fläche ausgebildet ist und einen inneren Durchmesser besitzt, der mit dem des Einstecklochs (201) identisch ist.

## Revendications

1. Palier lisse de butée en résine synthétique comprenant :

un carter supérieur (100) comportant une partie plate annulaire (102) ;
un carter inférieur (200) qui est superposé sur ledit carter supérieur (100) de manière à pouvoir tourner autour d'un axe dudit carter supérieur (100), et qui comporte une partie plate annulaire (202) située en face de la partie plate annulaire (102) du carter supérieur (100) et un évidement annulaire (204) formé dans la partie plate annulaire (202) et entouré par des première et deuxième saillies annulaires concentriques (203, 205) dudit carter inférieur (200) ; et
une pièce de palier lisse de butée en résine synthétique (300) constituée par un disque (304) qui est placé dans l'évidement annulaire (204) dudit carter inférieur (200), est mise en contact glissant avec la partie plate annulaire (102) dudit carter supérieur (100), et comporte un trou circulaire (302) dans une partie centrale de celle-ci, ledit disque (304) ayant substantiellement la même dimension de section transversale sur toute sa circonférence, ladite pièce de palier lisse de butée (300) étant placée dans l'évidement annulaire (204) via un jeu annulaire (A1) entre une surface périphérique intérieure (301) du trou circulaire (302) et une surface périphérique extérieure (207) de la première saillie annulaire (203) du carter inférieur (200) et un jeu annulaire (A2) entre une surface périphérique extérieure (303) du disque (304) et une surface périphérique intérieure (208) de la deuxième saillie annulaire (205) du carter inférieur (200), et étant placée dans l'évidement annulaire (204) de telle manière qu'une surface supérieure (305) de celle-ci est mise en contact glissant avec une surface inférieure (105) dudit carter supérieur (100) pour avoir une partie faisant saillie à l'extérieur de l'évidement annulaire (204), et de telle manière qu'une surface inférieure (306) de celle-ci est mise en contact glissant avec une surface inférieure (209) de l'évidement annulaire (204) du carter inférieur (200),

ledit carter supérieur (100) étant combiné avec ledit carter inférieur (200) en étant assemblé de façon résiliente avec ledit carter inférieur (200),

**caractérisé en ce que** si le diamètre extérieur de la surface périphérique extérieure (207) de la première saillie annulaire (203) est c, le diamètre intérieur de la surface périphérique intérieure (208) de la deuxième saillie annulaire (205) est d, le diamètre de la surface périphérique intérieure (301) du trou circulaire (302) de ladite pièce de palier lisse de butée (300) est a, le diamètre de la surface périphérique extérieure (303) du disque (304) est b, l'épaisseur de la pièce de palier lisse de butée (300) correspondant à une profondeur de l'évidement annulaire (204) de la surface inférieure (209) à l'ouverture de celui-ci est f, et une épaisseur de la pièce de palier lisse de butée (300) est e, alors la somme (A) des volumes des jeux annulaires (A1) et (A2) et le volume (B) de la partie de la pièce de palier lisse de butée (300) qui fait saillie à l'extérieur de l'évidement annulaire (204) du carter inférieur (200) satisfont l'inégalité B > A, représentée par la formule $e(b^2 - a^2) > f(d^2 - c^2)$.

2. Palier lisse de butée en résine synthétique selon la revendication 1, dans lequel ledit carter supérieur (100) comprend :

la partie plate annulaire (102) comportant un trou circulaire (101) dans une partie centrale de celle-ci ;
une partie d'engagement cylindrique suspendue (103) formée intégralement au niveau d'un bord périphérique extérieur de la partie plate annulaire (102) ; et
une partie de crochet d'engagement (104) formée sur une surface périphérique intérieure d'une partie d'extrémité de la partie d'engagement cylindrique suspendue (103), et

dans lequel ledit carter inférieur (200) comprend :

la partie plate annulaire (202) comportant dans une partie centrale un trou d'insertion (201) de même diamètre que celui du trou circulaire (101) du carter supérieur (100) ;
la première saillie annulaire (203) ayant un diamètre intérieur identique à celui du trou d'insertion (201) et étant formée intégralement sur une surface supérieure de la partie plate annulaire (202) ;
la deuxième saillie annulaire (205) formée intégralement au niveau d'un bord périphérique extérieur de la partie plate annulaire (202) de manière à être espacée radialement vers l'extérieur à un intervalle prédéterminé de la première saillie annulaire (203), afin de former l'évidement annulaire (204) en coopération avec la première saillie annulaire (203) et la surface supérieure de la partie plate annulaire (202) ; et
une partie d'engagement (206) formée sur une surface périphérique extérieure d'une extrémité inférieure de la deuxième saillie annulaire (205),
ledit carter supérieur (100) étant combiné avec ledit carter inférieur (200) en assemblant la partie de crochet d'engagement (104) de façon résiliente avec la partie d'engagement (206) dudit carter inférieur (200).

3. Palier lisse de butée en résine synthétique selon la revendication 1, dans lequel ledit carter supérieur (100) comprend :

la partie plate annulaire (102) comportant un trou circulaire (101) dans une partie centrale de celle-ci ;
une partie cylindrique suspendue (106) formée d'un seul tenant avec une surface inférieure de la partie plate annulaire (102) de manière à être espacée radialement vers l'extérieur à un intervalle prédéterminé d'un bord périphérique du trou circulaire (101) ;
une partie d'engagement cylindrique suspendue (103) formée intégralement au niveau d'un bord périphérique extérieur de la partie plate annulaire (102) de manière à être espacée radialement vers l'extérieur à un intervalle prédéterminé de la partie cylindrique suspendue (106), afin de former une rainure annulaire (107) en coopération avec la partie cylindrique suspendue (106) ; et

une partie de crochet d'engagement (104) formée sur une surface périphérique intérieure d'une partie d'extrémité de la partie d'engagement cylindrique suspendue (103), et

dans lequel ledit carter inférieur (200) comprend :

la partie plate annulaire (202) comportant dans une partie centrale un trou d'insertion (201) de même diamètre que celui du trou circulaire (101) dudit carter supérieur (100) ;

la première saillie annulaire (203) ayant un diamètre intérieur identique à celui du trou d'insertion (201) et étant formée sur une surface supérieure de la partie plate annulaire (202) ;

la deuxième saillie annulaire (205) étant formée sur la surface supérieure de la partie plate annulaire (202) de manière à être espacée radialement vers l'extérieur à un intervalle prédéterminé de la première saillie annulaire (203), afin de former l'évidement annulaire (204) en coopération avec la première saillie annulaire (203) et la surface supérieure de la partie plate annulaire (202) ;

une partie d'engagement saillante cylindrique (213) formée intégralement au niveau d'un bord périphérique extérieur de la partie plate annulaire (202) de manière à être espacée radialement vers l'extérieur à un intervalle prédéterminé de la deuxième saillie annulaire (205), afin de former une rainure annulaire (212) en coopération avec la deuxième saillie annulaire (205) ; et

une partie d'engagement (206) formée sur une surface périphérique extérieure d'une extrémité inférieure de la partie d'engagement saillante cylindrique (213),

ledit carter supérieur (100) étant combiné avec ledit carter inférieur (200) en superposant radialement une partie d'extrémité de la partie cylindrique suspendue (106) sur une partie d'extrémité de la deuxième saillie annulaire (205) et en assemblant la partie de crochet d'engagement (104) de façon résiliente avec ladite partie d'engagement (206).

4.  Palier lisse de butée en résine synthétique selon la revendication 1, dans lequel ledit carter supérieur (100) comprend :

la partie plate annulaire (102) comportant un trou circulaire (101) dans une partie centrale de celle-ci ;

une première partie cylindrique suspendue (108) formée d'un seul tenant avec une surface inférieure de la partie plate annulaire (102) et ayant un diamètre intérieur identique à celui du trou circulaire (101) ;

une deuxième partie cylindrique suspendue (106) formée d'un seul tenant avec la surface inférieure de la partie plate annulaire (102) de manière à être espacée radialement vers l'extérieur à un intervalle prédéterminé d'une surface périphérique extérieure de la première partie cylindrique suspendue (108), afin de former un évidement annulaire (204) en coopération avec la première partie cylindrique suspendue (108) et la surface inférieure de la partie plate annulaire (102) ;

une partie d'engagement cylindrique suspendue (103) formée intégralement au niveau d'un bord périphérique extérieur de la partie plate annulaire (102) de manière à être espacée radialement vers l'extérieur à un intervalle prédéterminé de la deuxième partie cylindrique suspendue (106), afin de former une rainure annulaire (109) en coopération avec la deuxième partie cylindrique suspendue (106) ; et

une partie de crochet d'engagement (104) formée sur une surface périphérique intérieure d'une partie d'extrémité de la partie d'engagement cylindrique suspendue (103), et

dans lequel ledit carter inférieur (200) comprend :

la partie plate annulaire (202) comportant dans une partie centrale un trou d'insertion (201) de même diamètre que celui du trou circulaire (101) dudit carter supérieur (100) ;

la première saillie annulaire (203) étant formée intégralement sur une surface supérieure de la partie plate annulaire (202) de manière à être espacée radialement vers l'extérieur par rapport au trou d'insertion (201) par l'intermédiaire d'une partie d'épaulement annulaire (214) ;

la deuxième saillie annulaire (205) étant formée sur la surface supérieure de la partie plate annulaire (202) de manière à être espacée radialement vers l'extérieur à un intervalle prédéterminé de la première saillie annulaire (203), afin de former l'évidement annulaire (204) en coopération avec la première saillie annulaire (202) et la surface supérieure de la partie plate annulaire (202) ;

une partie d'engagement saillante cylindrique (213) formée intégralement au niveau d'un bord périphérique extérieur de la partie plate annulaire (202) de manière à être espacée radialement vers l'extérieur à un intervalle prédéterminé d'une surface périphérique extérieure de la deuxième saillie annulaire (205), afin de former une rainure annulaire (212) en coopération avec la deuxième saillie annulaire (205) et la surface supérieure de la partie plate annulaire (202) ; et

une partie d'engagement (206) formée sur une surface périphérique extérieure d'une extrémité inférieure de la partie d'engagement saillante cylindrique (213), ledit carter supérieur (100) étant combiné avec ledit carter inférieur (200) en superposant radialement une partie d'extrémité de la première partie cylindrique suspendue (108) et une partie d'extrémité de la deuxième partie cylindrique suspendue (106) respectivement sur une partie d'extrémité de la première saillie annulaire (203) et une partie d'extrémité de la deuxième saillie annulaire (205), et en assemblant la partie de crochet d'engagement (104) de façon résiliente avec la partie d'engagement (206).

5. Palier lisse de butée en résine synthétique selon la revendication 1, dans lequel ledit carter supérieur (100) comprend :

la partie plate annulaire (102) comportant un trou circulaire (101) dans une partie centrale de celle-ci ;

une première partie cylindrique suspendue (108) formée d'un seul tenant avec une surface inférieure de la partie plate annulaire (102) et ayant un diamètre intérieur identique à celui du trou circulaire (101) ;

une deuxième partie cylindrique suspendue (106) formée d'un seul tenant avec la surface inférieure de la partie plate annulaire (102) de manière à être espacée radialement vers l'extérieur à un intervalle prédéterminé de la première partie cylindrique suspendue (108), afin de former une rainure annulaire (109) en coopération avec une surface périphérique extérieure de la première partie cylindrique suspendue (108) ;

une troisième partie cylindrique suspendue (106) formée d'un seul tenant avec la surface inférieure de la partie plate annulaire (102) de manière à être espacée radialement vers l'extérieur à un intervalle prédéterminé de la deuxième partie cylindrique suspendue (106), afin de former l'évidement annulaire (204) en coopération avec la deuxième partie cylindrique suspendue (106) et la surface inférieure de la partie plate annulaire (102) ;

une partie d'engagement cylindrique suspendue (103) formée intégralement au niveau d'un bord périphérique extérieur de la partie plate annulaire (102) de manière à être espacée radialement vers l'extérieur à un intervalle prédéterminé de la troisième partie cylindrique suspendue (106), afin de former une rainure annulaire (107) en coopération avec la troisième partie cylindrique suspendue (106) ; et

une partie de crochet d'engagement (104) formée sur une surface périphérique intérieure d'une partie d'extrémité de la partie d'engagement cylindrique suspendue (103), et

dans lequel ledit carter inférieur (200) comprend :

la partie plate annulaire (202) comportant dans une partie centrale un trou d'insertion (201) de même diamètre que celui du trou circulaire (101) dudit carter supérieur (100) ;

une partie saillante cylindrique (215) formée intégralement sur une surface supérieure de la partie plate annulaire (202) de manière à être espacée radialement vers l'extérieur par rapport au trou d'insertion (201) par l'intermédiaire d'une partie d'épaulement annulaire (214) ;

la première saillie annulaire (203) étant formée intégralement sur la surface supérieure de la partie plate annulaire (202) de manière à être espacée radialement vers l'extérieur à un intervalle prédéterminé de la partie saillante cylindrique (215), afin de former une rainure annulaire (216) en coopération avec la partie saillante cylindrique (215) ;

la deuxième saillie annulaire (205) étant formée sur la surface supérieure de la partie plate annulaire (202) de manière à être espacée radialement vers l'extérieur à un intervalle prédéterminé de la première saillie annulaire (203), afin de former l'évidement annulaire (204) en coopération avec la première saillie annulaire (203) et la surface supérieure de la partie plate annulaire (202) ;

une partie d'engagement saillante cylindrique (213) formée intégralement au niveau d'un bord périphérique extérieur de la partie plate annulaire (202) de manière à être espacée radialement vers l'extérieur à un intervalle prédéterminé de la deuxième saillie annulaire (205), afin de former une rainure annulaire (212) en coopération avec la deuxième saillie annulaire (205) ; et

une partie d'engagement (206) formée sur une surface périphérique extérieure d'une extrémité inférieure de la partie d'engagement saillante cylindrique (213), ledit carter supérieur (100) étant combiné avec ledit carter inférieur (200) en superposant radialement des parties d'extrémité de la première partie cylindrique suspendue (108) et de la deuxième partie cylindrique suspendue (106) et une partie d'extrémité de la troisième partie cylindrique suspendue (106) respectivement sur des parties d'extrémité respectives de la partie saillante cylindrique (215) et de la première saillie annulaire (203) et une partie d'extrémité de la deuxième saillie annulaire (205), et en assemblant la partie de crochet d'engagement (104) de façon résiliente avec la partie d'engagement (206).

**6.** Palier lisse de butée en résine synthétique selon l'une quelconque des revendications 1 à 5, dans lequel ladite pièce de palier de butée (300) a sur chacune de ses surfaces supérieure et inférieure (305, 306) une rainure annulaire (307) qui entoure le trou circulaire (101) et une pluralité de rainures radiales (308) ayant chacune une extrémité ouverte au niveau de la rainure annulaire (307) et une autre extrémité ouverte au niveau de la surface périphérique extérieure (303) et agencées à intervalle régulier dans une direction circonférentielle.

**7.** Palier lisse de butée en résine synthétique selon l'une quelconque des revendications 1 à 6, dans lequel ledit carter inférieur (200) a une partie cylindrique (211) formée intégralement sur une surface inférieure de celui-ci et ayant un diamètre intérieur identique à celui du trou d'insertion (201).

FIG. 1

FIG. 2

FIG. 3

105 305 304    101 102 100    1

205    203    103
206    302    303
201    301
104

202 208 A1    209 200 A2
204 207    300 210
211

FIG. 4

O

100    101 300    44
1    R
205    103
203
201
200    211 210
42
41
43

FIG. 5

105 305 102    207         101      100 304 106    1

213
206

212 205  306  202 A1
    208  204

203
201

302
301

107
103
303

104

300 209 200 A2

FIG. 6

d

b

a

c

B

213

212 205  200  207 A1
    208  204

203       301

302 304 300 A2 303

f  e

EP 2 192 314 B1

FIG. 7

208 102 305 207 203

101

100 109 106

1

107

213

108

103

206

214

303

212 205 204 209 202 A1 201

302 301 300 304 200 A2

104

FIG. 8

d

b

a

c

213

206

214

302

f e

212 208 200 207 203

205 202 204 A1 201

301 304 300 A2 303

27

FIG. 9

FIG. 10

FIG. 11

FIG.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP UMB452488 B
- JP UMB21532 B
- JP UMB26263 B
- JP UMB82500 B

- JP UMB447445 B
- EP 1548303 A
- EP 1365162 A